(19) **Europäisches Patentamt**
**European Patent Office**
**Office européen des brevets**

(11) **EP 4 641 911 A1**

(12) **EUROPEAN PATENT APPLICATION**

(43) Date of publication:
**29.10.2025 Bulletin 2025/44**

(21) Application number: **24172780.9**

(22) Date of filing: **26.04.2024**

(51) International Patent Classification (IPC):
**H02M 7/5387** *(2007.01)* **H02M 1/00** *(2006.01)*
**H02J 7/00** *(2006.01)* **H02M 7/483** *(2007.01)*

(52) Cooperative Patent Classification (CPC):
**H02M 1/0093; H02M 1/009;** H02J 7/0013;
H02J 7/0063; H02J 2207/20; H02M 7/49

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Instagrid GmbH**
**71636 Ludwigsburg (DE)**

(72) Inventor: **Gutknecht, Philipp**
**Mönsheim (DE)**

(74) Representative: **Eisenführ Speiser**
**Patentanwälte Rechtsanwälte PartGmbB**
**Postfach 10 60 78**
**28060 Bremen (DE)**

(54) **VOLTAGE CONTROL METHODOLOGIES FOR ENERGY STORAGE DEVICES**

(57) Systems, methods and, software products for operating circuit with an energy storage module. The methods comprising: providing a reference waveform signal; acquiring an actual output voltage of the energy storage module; generating an error signal by combining the actual output voltage with the reference waveform signal; applying, to the error signal, a transfer function to obtain a correction signal; generating a control signal by combining the correction signal with the reference waveform signal; and using the control signal to govern an output voltage of an inverter circuit of the energy storage module.

FIG. 22

(Voltage Loop)

**Description**

BACKGROUND

Description of the Related Art

Battery cell packs are often used to power electronic devices. Different combinations of the battery cell packs are used to provide different output voltages.

SUMMARY

The present disclosure concerns implementing systems and methods for operating a circuit with an energy storage module. The method comprise: providing a reference waveform signal; acquiring an actual output voltage of the energy storage module; generating an error signal by combining the actual output voltage with the reference waveform signal; applying, to the error signal, a transfer function to obtain a correction signal; generating a control signal by combining the correction signal with the reference waveform signal; and using the control signal to govern an output voltage of an inverter circuit of the energy storage module.

The present disclosure also concerns implementing systems and methods for operating a circuit with an energy storage module. The method comprises: providing, via a pulse width modulator, an output voltage from the energy storage module; providing a reference waveform signal; generating an error signal by combining a measurement of the output voltage with the reference waveform signal; applying, to the error signal, a transfer function to obtain a correction signal; generating a control signal by combining the correction signal with the reference waveform signal; and using the control signal to govern an instantaneous value of the output voltage. The transfer function comprises: a first gain component having a second-order low-pass response with a first low-frequency gain value (e.g., DC gain value); a second gain component acting parallely to the first gain component and having a first-order low-pass response with a second low-frequency gain value (e.g., DC gain value); and the first low-frequency (e.g., DC) gain value is higher than the second (e.g., DC) gain value.

As shall be appreciated, the present teachings provide solutions which can ensure well-defined parameters (e.g., output voltage and/or current) of an electrical system despite internal and/or external non-idealities which can exist in practical systems. The present teachings can allow control of desired one or more parameters (e.g., voltage and/or current) whilst ensuring stable closed-loop response. The present teachings are especially useful for electrical systems comprising energy storage devices. Another highly relevant application of the present teachings is in buck-type power converters such as inverters. Especially in multi-level inverters (e.g., cascaded inverters), providing well defined output which is independent of non-idealities can be especially difficult. The present teachings can at least partially solve those problems.

BRIEF DESCRIPTION OF THE DRAWINGS

The present solution will be described with reference to the following drawing figures, in which like numerals represent like items throughout the figures.

FIG. 1A provides a schematic diagram of an example energy storage module, according to some non-limiting embodiments or aspects.

FIG. 1B provides an illustrative block diagram of a circuit in the energy storage module.

FIG. 1C provides a circuit diagram of an energy storage module, according to some non-limiting embodiments or aspects.

FIG. 1D provides a perspective view of an energy storage module.

FIG. 1E provides an illustrative circuit diagram for the transistor active bridge circuit. FIGS. 1A-1E are collectively referred to as "FIG. 1".

FIGS. 2A-2C (collectively referred to as "FIG. 2") are schematic diagrams of an example energy storage module container of energy storage modules, according to some non-limiting embodiments or aspects.

FIGS. 3A and 3B (collectively referred to as "FIG. 3") are schematic diagrams of an example power supply system, according to some non-limiting embodiments or aspects.

FIGS. 4A-4B each provide a circuit diagram of an example power supply system, according to some non-limiting embodiments or aspects.

FIG. 5 provides an illustration of a high-order voltage control loop.

FIG. 6 provides a graphs showing an illustrative frequency response of an anti-aliasing filter.

FIG. 7 provides a block diagram of an illustrative transfer function circuit for a gain element in a high-order voltage control loop.

FIG. 8 provides an illustrative response of digital domain parts of a high-order voltage control loop.

FIGS. 9A-9B (collectively referred to as "FIG. 9") provide graphs that are useful for understanding operations of a high-order voltage control loop.

FIG. 10 provides a block diagram of another illustrative transfer function circuit for a gain element in a high-order voltage control loop.

FIG. 11 provides a graph showing the frequency response of the transfer function circuit shown in FIG. 10.

FIG. 12 provides a graph showing an open loop response of the transfer function circuit shown in FIG. 10.

FIG. 13 provides a block diagram for a current control loop.

FIG. 14 provides a graph showing a frequency response of an anti-aliasing filter.

FIG. 15 provides a graph showing an analog transfer function for an anti-aliasing filter combined with voltage difference to current translation in inductors.

FIGS. 16A-16B (collectively referred to as "FIG. 16") each provides a block diagram of an illustrative transfer function circuit for a gain element in a current control loop.

FIG. 17 shows an illustrative response of digital domain parts of a current control loop.

FIGS. 18A-18B (collectively referred to as "FIG. 18") provide graphs that are useful for understanding operations of a current control loop.

FIG. 19 provides a block diagram of an illustrative transfer function circuit for a gain element of a current control loop.

FIG. 20 provides a graph showing a frequency response of an anti-aliasing filter.

FIG. 21 provides a graph showing an open loop response graph for the transfer function circuit of FIG. 19.

FIG. 22 provides a block diagram of a high-order voltage control loop with a controlled voltage source model.

FIG. 23 provides a block diagram of a high-order voltage control loop with a unit delay.

FIGS. 24A-B (collectively referred to as "FIG. 24") each provides a block diagram of another illustrative current control loop.

FIG. 25 shows waveforms at different points in a current control loop.

FIG. 26 provides a flow diagram of an illustrative method for operating a circuit.

FIGS. 27-29 each provides a flow diagram of an illustrative method of operating a circuit with an energy storage module.

FIG. 30 provides an illustration of a second order low pass filter.

DETAILED DESCRIPTION

The present solution is described with reference to the attached figures. The figures are not drawn to scale and they are provided merely to illustrate the instant solution. Several aspects of the present solution are described below with reference to example applications for illustration. It should be understood that numerous specific details, relationships, and methods are set forth to provide a full understanding of the present solution. One having ordinary skill in the relevant art, however, will readily recognize that the present solution can be practiced without one or more of the specific details or with other methods. In other instances, well-known structures or operations are not shown in detail to avoid obscuring the present solution. The present solution is not limited by the illustrated ordering of acts or events, as some acts may occur in different orders and/or concurrently with other acts or events. Furthermore, not all illustrated acts or events are required to implement a methodology in accordance with the present solution.

It should also be appreciated that the terminology used herein is for the purpose of describing particular embodiments only and is not intended to be limiting of the present solution. As used herein, the singular forms "a", "an" and "the" are intended to include the plural forms as well, unless the context clearly indicates otherwise. Furthermore, to the extent that the terms "including", "includes", "having", "has", "with", or variants thereof are used in either the detailed description and/or the claims, such terms are intended to be inclusive in a manner similar to the term "comprising."

Further, unless otherwise defined, all terms (including technical and scientific terms) used herein have the same meaning as commonly understood by one of ordinary skill in the art to which this solution belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

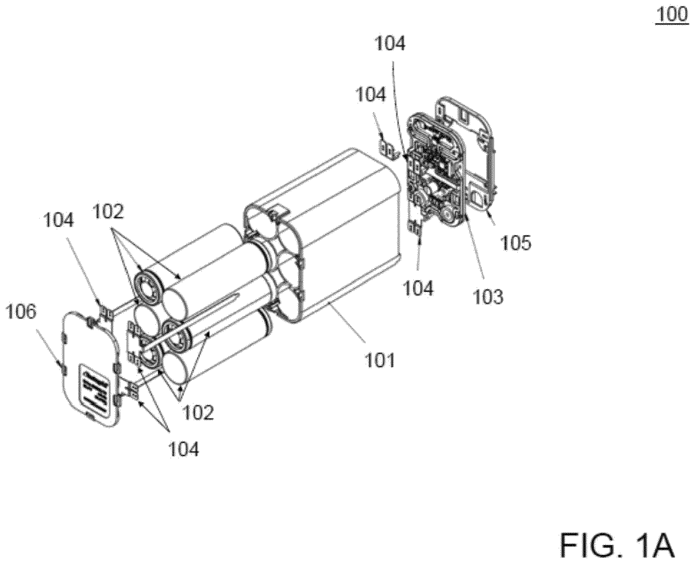

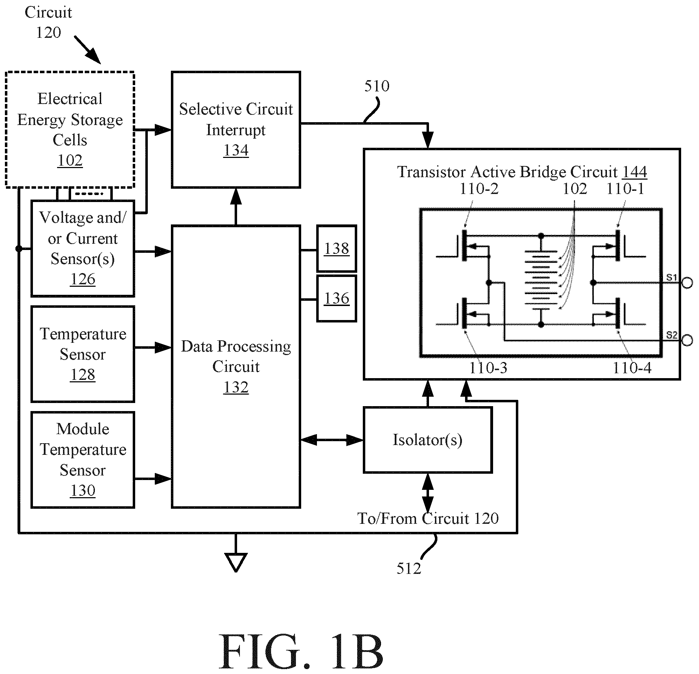

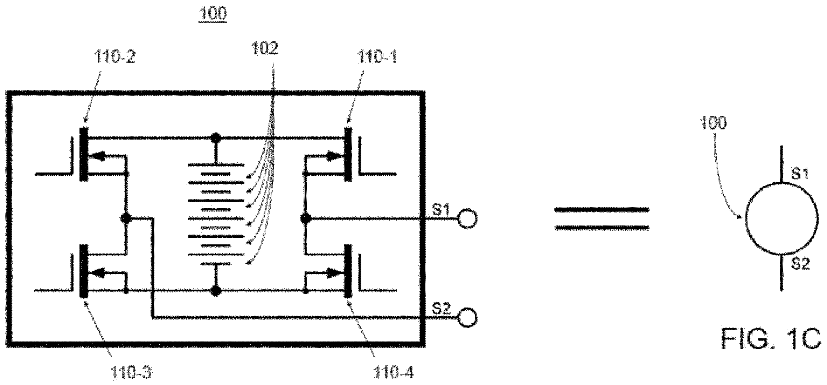

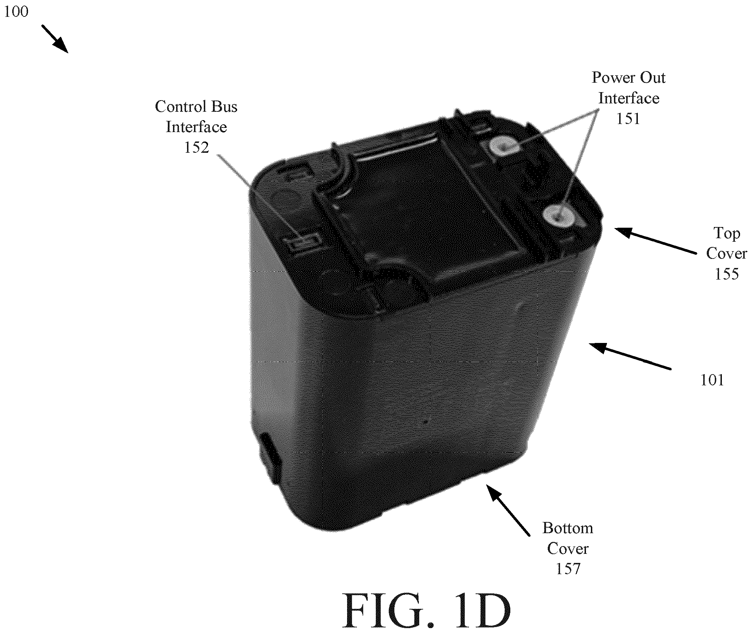

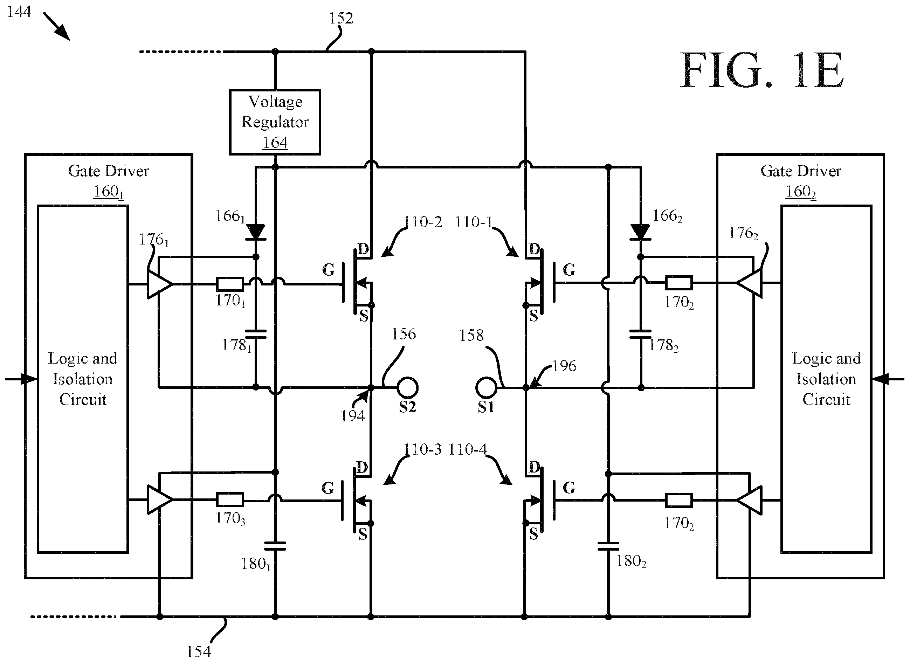

Referring now to FIG. 1A, depicted is a schematic diagram of an example energy storage module **100,** according to some non-limiting embodiments or aspects. As shown in FIG. 1, energy storage module **100** may include housing **101,** at least one energy storage component **102,** module controller **103,** connectors **104,** top cover **105,** and bottom cover **106.** The number and arrangement of components shown are provided as an example. In some non-limiting embodiments or aspects, energy storage module **100** may include additional components, fewer components, different components, or differently arranged components than those shown. Additionally or alternatively, a set of components (e.g., one or more components) of energy storage module **100** may perform one or more functions described as being performed by another set of components of energy storage module **100.**

In some non-limiting embodiments or aspects, housing **101** may include plastic, metal, any combination thereof, and/or the like. For example, housing **101** may include a plastic housing.

In some non-limiting embodiments or aspects, housing **101** may be configured to hold at least one (e.g., a plurality of) energy storage components **102.** For example, as shown in FIG. 1, housing **101** may be shaped to have six energy storage components **102** uniformly distributed in an interior space defined by housing **101.**

In some non-limiting embodiments or aspects, each energy storage component **102** may include at least one of a battery, a rechargeable battery (e.g., a lithium-ion battery), a cell (e.g., battery cell, an electrochemical cell, and/or the like), a rechargeable cell, a capacitor, an ultra-capacitor, any combination thereof, and/or the like. For example, as shown in FIG. 1, each energy storage component **102** may include a cylindrical cell (e.g., lithium-ion battery cell).

In some non-limiting embodiments or aspects, module controller **103** may include a controller and associated circuitry. Optionally, module controller **103** may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function.

In some non-limiting embodiments or aspects, connectors **104** may connect the terminals (e.g., ends) of each energy storage component **102** to module controller **103.** Additionally or alternatively, at least one connector **104** may connect at least one terminal (e.g., end) of one energy storage component **102** to another terminal of another energy storage component **102.** For example, connectors **104** may include a conductive (e.g., electrically conductive) material, such as metal and/or the like. In some non-limiting embodiments or aspects, some or all of the connectors **104** may be used for energy storage component **102** (e.g., cell) voltage measurements.

In some non-limiting embodiments or aspects, each of top cover **105** and bottom cover **106** may include plastic, metal, any combination thereof, and/or the like. For example, each of top cover **105** and bottom cover **106** may include a plastic cover. In some non-limiting embodiments or aspects, top cover **105** and bottom cover **106** may be configured to (e.g., sized and shaped to) cover openings at top and bottom ends, respectively, of housing **101.** In some non-limiting embodiments or aspects, top cover **105** may include a first electrical connection (e.g., **S1,** as described herein), a second electrical connection (e.g., **S2,** as described herein), and/or at least one communication connection, as described herein. For example, these connections may allow for electrical and/or communicative connection between module controller **103** and external components (e.g., other components of the power supply system external to the energy storage module housing).

In some non-limiting embodiments or aspects, energy storage module **100** may include a battery module. For example, the battery module may include at least one energy storage component (e.g., a battery cell, such as a rechargeable battery cell). For the purpose of illustration, as shown in FIG. 1A, the battery module may include six energy storage components (e.g., rechargeable battery cells, such as lithium-ion cells, supercapacitors, and/or the like).

In some non-limiting embodiments or aspects, energy storage components **102** (e.g., battery cells) of energy storage module **100** may be connected in series. In some non-limiting embodiments or aspects, energy storage components **102** (e.g., battery cells) of energy storage module **100** may be connected in parallel.

In some non-limiting embodiments or aspects, at least some (e.g., a subset of) energy storage components **102** may be connected in series, for example, so that the combined (e.g., summed and/or the like) voltage of the series-connected components satisfies (e.g., equals, exceeds, and/or the like) the target (e.g., desired) operating voltage of energy storage module **100.** In some non-limiting embodiments or aspects, at least some (e.g., a subset of) energy storage components **102** may be connected in parallel, for example, so that the combined (e.g., summed and/or the like) capacity (e.g., current) of the parallel-connected components satisfies (e.g., equals, exceeds, and/or the like) the target (e.g., desired) a target capacity (e.g., operating current of energy storage module **100**). For example, energy storage module **100** may include a plurality of subsets of energy storage components **102** such that energy storage components **102** of each subset are connected in series (e.g., to combine to output the desired module voltage), and the subsets may be connected in parallel (e.g., to combine to output the desired module current).

In some non-limiting embodiments or aspects, energy storage module **100** may be the same as or similar to or include at least some components that are the same as or similar to the battery modules described in at least one of U.S. Patent Application Pub. No. 2022/0037891, U.S. Patent Application Pub. No. 2022/0247030, U.S. Patent Application Pub. No. 2022/0359918, and/or U.S. Patent Application Pub. No. 2022/0360094, the disclosures of each of which are hereby incorporated by reference in their entireties.

As shown in FIG. 1B, a circuit **120** of the energy storage module **100** comprises voltage and optionally, current sensors **126** connected to the energy storage components **102**. These sensors **126** are configured to measure the voltage and/or current of each energy storage component. Circuit **120** also comprises temperature sensors **128** and a module temperature sensor **130** Each temperature sensor **128** is configured to measure a temperature of one or more energy storage components, while the module temperature sensor **130** is configured to measure an internal temperature of the energy storage module. These sensor measurements are communicated from the sensors **126, 128, 130** to the data processing circuit **132** for processing. The data processing circuit **132** can perform operations to communicate sensor measurements as sensor data to the module controller **103** or an external circuit, and/or perform operations to analyze the sensor measurements to determine if certain criteria is met. For example, if a parameter measurement falls outside of defined range at a given time or for a certain amount of time, then the data processing circuit **132** causes the selective circuit interrupt **134** to transition from a closed state to an open state such that the energy storage module **100** is turned off. The parameter measurement can include a voltage measurement, a current measurement or a temperature measurement.

The data processing circuit **132** may be configured to access datastore(s) **136**. Datastore(s) **136** can comprise computer-readable storage medium on which is stored one or more sets of instructions configured to implement one or more of the methodologies, procedures, or functions described herein. The instructions can also reside, completely or at least partially, within the data processing circuit **132** during execution thereof by the data processing circuit **132**. Datastore(s) **136** and data processing circuit **132** also can constitute machine-readable media. The term "machine-readable media", as used here, refers to a single medium or multiple media (e.g., a centralized or distributed database, and/or associated caches and servers) that store the one or more sets of instructions. The term "machine-readable media", as used here, also refers to any medium that is capable of storing, encoding or carrying a set of instructions for execution by the data processing circuit **132** and that cause the data processing circuit **132** to perform any one or more of the methodologies of the present disclosure. Data processing circuit **132** can include, but is not limited to, processor(s).

Circuit **120** also comprises a transistor active bridge circuit **144.** The transistor active bridge circuit **144** comprises at least one switching element (e.g., first switching element **110-1,** second switching element **110-2,** third switching element **110-3,** and/or fourth switching element **110-4,** collectively referred to as "switching elements **110,"** and individually referred to as "switching element **110**"), first electrical connection **S1,** and second electrical connection **S2.**

In some non-limiting embodiments or aspects, switching elements **110** may be part of (e.g., integrated on, connected to, and/or the like) module controller **103**. In some non-limiting embodiments or aspects, first electrical connection **S1** and/or second electrical connection **S2** may be part of (e.g., integrated on, connected to, and/or the like) module controller **103** and/or may extend through top cover **105**. The number and arrangement of components shown are provided as an example. In some non-limiting embodiments or aspects, energy storage module **100** may include additional components, fewer components, different components, or differently arranged components than those shown. Additionally or alternatively, a set of components (e.g., one or more components) of energy storage module **100** may perform one or more functions described as being performed by another set of components of energy storage module **100.**

As shown in the example in FIG. 1B, energy storage module **100** may include six energy storage components **102** (e.g., rechargeable battery cells and/or the like) connected in series. In some non-limiting embodiments or aspects, energy storage components **102** may be in other arrangements and/or have other connections, as described herein.

In some non-limiting embodiments or aspects, switching elements **110** may be switched (e.g., opened, closed, activated, deactivated, and/or the like) to selectively connect energy storage component(s) **102** to first electrical connection **S1** and/or second electrical connection **S2**, e.g., to control a module voltage across first electrical connection **S1** and second electrical connection **S2**. For example, switching elements **110** may be switched so that (1) first electrical connection **S1** and second electrical connection **S2** are both connected to negative side (e.g., DC minus) of energy storage component(s) **102**, (2) first electrical connection **S1** is connected to the negative side (e.g., DC minus) of energy storage component(s) **102** and second electrical connection **S2** is connected to the positive side (e.g., DC plus) of energy storage component(s) **102**, or (3) first electrical connection **S1** is connected to the positive side (e.g., DC plus) of energy storage component(s) **102** and second electrical connection **S2** is connected to the negative side (e.g., DC minus) of energy storage component(s) **102**. As such, the voltage across first electrical connection **S1** and second electrical connection **S2** may be zero, negative, or positive, respectively.

For the purpose of illustration by way for a few examples, to connect both first electrical connection **S1** and second electrical connection **S2** to the negative side (e.g., DC minus) of energy storage component(s) **102,** fourth switching element **110-4** and third switching element may both be activated (e.g., closed, set to act as a closed switch, and/or the like), while second switching element **110-2** and first switching element **110-1** are deactivated (e.g., open, set to act as an open switch, and/or the like). To connect first electrical connection **S1** to the negative side (e.g., DC minus) and connect second electrical connection **S2** to the positive side (e.g., DC plus) of energy storage component(s) **102,** fourth switching element **110-4** and second switching element **110-2** may be activated, while third switching element **110-3** and first switching element **110-1** are deactivated. To connect first electrical connection S1 to the positive side (e.g., DC plus) and second electrical connection **S2** to the negative side (e.g., DC minus) of energy storage component(s) **102,** first switching element **110-1** and third switching element **110-3** may be activated, and fourth switching element **110-4** and second switching element **110-2** may be deactivated. In some non-limiting embodiments or aspects, the switching elements **110** may be operated to be in states such as: a high-impedance (Hi-Z) state (e.g., in which all of the switching elements **110** are deactivated), a bypass state (e.g., in which the low-side switching elements **110-3** and **110-4** are activated while the high-side switching elements **110-1** and **110-2** are deactivated), and two polarity states (e.g., in which the energy storage component(s) **102** are connected between the first electrical connection **S1** and the second electrical connection **S2** in opposite polarity manner).

In some non-limiting embodiments or aspects, each switching element **110** may include at least one of a transistor (e.g., bipolar transistor, field-effect transistor (FET), metal-oxide-semiconductor field-effect transistor (MOSFET), and/or the like), a switch, a contactor, any combination thereof, and/or the like. In some non-limiting embodiments or aspects, the energy storage module **100** may include one or more driver circuits, such as a gate driver circuit, for driving each switching element **110**. For example, the driver circuits may be part of (e.g., integrated on, connected to, and/or the like) module controller **103**.

In some non-limiting embodiments or aspects, each switching element **110** may be driven, or controlled, via the module controller **103**. For example, module controller **103** may control the switching elements **110** to selectively connect energy storage component(s) **102** to first electrical connection **S1** and/or second electrical connection **S2,** as described herein. For example, module controller **103** may be connected to each switching element **110** in order to drive, or optionally control, such switching element **110**. In some non-limiting embodiments or aspects, the module controller **103** provides signals to the gate driver circuit for driving the switching elements **110**.

As shown in FIG. 1C, each energy storage module 100 may be represented by the symbol shown in FIG. 1C (e.g., for brevity and clarity of the following drawings).

FIG. 1D provides an illustration of an energy storage module **100**. An assembly view of the energy storage module **100** is provided in FIG. 1A. Energy storage module **100** comprises a housing **101** in which energy storage components **102** are housed so as to maintain certain positions relative to each other. The energy storage components **102** can be arranged in two rows of three energy storage components as shown in FIG. 1A. The present solution is not limited in this regard. The energy storage components can have a different arrangement than that shown in FIG. 1A. Any number of energy storage components can be provided in the energy storage module in accordance with a given application. Each energy storage component may include, but is not limited to, a lithium-ion cell. The lithium-ion cell may have a cylindrical shape as shown or another shape (e.g., a rectangular shape) not shown.

A top cover **155** and a bottom cover **157** are provided for the housing **101**. The covers **155, 157** may be configured to provide an environment seal with the housing **101**. The environmental seal may be facilitated by gaskets (not visible or shown in FIG. 1D and/or FIG. 1A) compressed between the covers **155, 157** and the housing's sidewalls.

The safe and reliable operation of the energy storage module **100** requires the constant monitoring of each energy storage component **102,** e.g., to detect when its current (optional), voltage and/or temperature fall outside of defined operating range(s). This monitoring is achieved using a circuit **120** that is also housed in the housing **101**.

Conductive terminals **104** are provided to connect the energy storage components **102** to the circuit **120** for at least voltage measurements.

As shown in FIG. 1E, the transistor active bridge circuit **144** comprises gate drivers **160$_1$, 160$_2$,** a voltage regulator **164,** diodes **166$_1$, 166$_2$** (collectively referred to as "**166**"), optional resistors **170$_1$, 170$_2$, 170$_3$, 170$_4$** (collectively referred to as "**170**"), capacitors **178$_1$, 178$_2$, 180$_1$, 180$_2$,** and a transistor active bridge **144.** The transistor active bridge circuit **144** is supplied a voltage waveform from the energy storage components **102.** As such, the transistor active bridge circuit **144** is connected to energy storage components **102** via input lines **152, 154.** Input line **152** may be referred to as a high input line, while input line may be referred to as a low input line **154.** The transistor active bridge circuit **144** is also connected between a pair of output lines **156, 158.** The output lines **156, 158** are connected to the power interface **151** of FIG. 1D.

The transistor active bridge circuit **144** includes a plurality of switches, shown in this example as field-effect transistors (FETs) **110-2, 110-3, 110-1, 110-4** of an N-channel type. Each of the FETs may comprise a metal-oxide semiconductor FET (MOSFET), but other types of switches or FETs (e.g., insulated gate bipolar transistors (IGBTs), bipolar junction transistors (BJTs), gate turn-off thyristors (GTOs) or their likes or combinations) instead of the shown type can also be contemplated. Each FET **110-2, 110-3, 110-1, 110-4** has three (3) terminals respectively defined as a source **S,** a gate **G** and a drain **D.** An electrical path is be provided from the source to the drain of each FET **110-2, 110-3, 110-1, 110-4.** This path is generally referred to herein as the source-drain path. A source-drain path of first FET **110-2** is connected in series with a source-drain path of the second FET **110-3.** The series connected transistor pair **110-2, 110-3** form a first series transistor combination that is connected across the input lines **152, 154.** A source-drain path of the third FET **110-1** is connected in series with a source-drain path of the fourth FET **110-4** to form a second series transistor combination connected across the input lines **152, 154.**

The transistor active bridge circuit **144** can have an output defined by output lines **156, 158.** A first one of the output lines **156** can be connected to the first series combination **110-2/110-3** at an interconnection point **194** between the first and the second field-effect transistors **110-2, 110-3.** A second one of the output lines **158** can be connected to the second series combination **110-1/110-4** at an interconnection point **196** between the third and fourth field-effect transistors **110-1, 110-4.**

Gate driver **160$_1$** is provided for driving the gate **G** of each FET **110-2, 110-3.** Similarly, gate driver **160$_2$** is provided for driving the gate **G** of each FET **110-1, 110-4.** In this regard, the gate drivers are configured to supply a voltage to the gate **G** of each respective FET at certain times for switching the FET to its "on" state or "off" state. The gate drivers are also configured to stop supplying the voltage to the gate **G** of the FET at certain times for switching the FET to its "on" state or "off" state. Gate driver circuits are well known. Known or to be known gate driver circuit can be used here.

When the gate drivers communicate gate control signals to the FETs, the FETs **110-2, 110-3, 110-1, 110-4** will be biased and switch to their "on" states. In effect, current will flow between the drain **D** and source **S** of these FETs. The FETs transition back to their "off" states when the gate control signals are no longer being output from the gate drivers. The gate drivers are configured to prevent the two FETs in each series pair **110-2/110-3** and **110-1/110-4** from being closed simultaneously or concurrently.

The FETs are switched alternatively by the gate driver to provide a certain power output across lines **156, 158.** For example, when the energy storage module is in its "on" state, one of the high side FETs **110-2, 110-1** is transitioned to its "on" state for a given period of time (e.g., 1 microsecond ($\mu$s) - 15 milliseconds (ms), as some further non-limiting examples, a few microseconds ($\mu$s), 10 $\mu$s, 20 $\mu$s, 50 $\mu$s, 0.1 ms, 2 ms, 5 ms, or even 10 ms). When the energy storage module is in its "off" state, the two high side FETs **110-2, 110-1** are in their "off" states and the two low side FETs **110-3, 110-4** are in their "on" states. In effect, the two low side FETs are conducting while the two high side FETs are not conducting.

The capacitors **178** are provided to store charge for driving the respective FETs **110-2, 110-4.** The respective capacitor **178** is chargeable via their respective diode **166.** In this regard, the supply voltage for the high-side gate driver output stages **176$_1$, 176$_2$** is stored in capacitors **178$_1$, 178$_2$.** Each of the capacitors **178$_1$, 178$_2$** is recharged when the corresponding output line **156, 158** is slewing towards the low supply line **154,** e.g., when the corresponding low side FETs **110-3** or **110-4** is switched to the "on" state. For example, when FET **110-3** is turned "on", the potential at output **S2** is pulled towards the potential at source **S** of FET **110-3.** At this time, diode **166$_1$** becomes conductive such that current flows from the voltage regulator **164** through capacitor **178$_1$** and transistor **110-3** to line **154.** In effect, capacitor **178$_1$** is recharged as the current flows therethrough. When the potential at output **S2** is slewing towards the high supply line **152,** the diode **166$_1$** acts as a blocking diode such that charge on the capacitor **178$_1$** is prevented from flowing back towards the voltage regulator **164.** Thus, charged capacitor **178$_1$** supplies voltage is supplied from the capacitor **178$_1$** to the high-side gate driver output stage **176$_1$** for driving the gate terminal of FET **110-2.** At some point, the capacitor will be discharged to a level which may cause the gate driver **160$_1$** to enter an undervoltage mode in which the gate driver is not operational anymore. The capacitor is recharged before it reaches this level of discharge. An advantage of the preset teachings is that switching of the low-side FETs **110-3, 110-4** can be used to simultaneously charge their corresponding capacitor **178** which is used for driving the high-side FETs **110-2, 110-1.**

It is rather common in gate driver circuits to use charge pumps or transformer isolated (e.g., multi-channel) DC-DC converters to facilitate power supply to the gate driver(s). These circuits tend to be relatively expensive. As evident from FIG. 1E, circuit **144** is absent of any charge pumps and therefore is less costly than conventional transistor active bridge circuits. The elimination of the charge pumps was achieved using circuit components **166, 178** to provide the voltage for the high-side gate driver output stages **176** in a controlled manner to avoid or minimize the likelihood that the gate driver **160₁** enters an undervoltage mode.

Capacitors **180₁, 180₂** has a similar role as capacitors **178₁, 178₂.** However, capacitors **180₁, 180₂** are permanently supplied a voltage signal by the voltage regulator **164.** As such, the low-side FETs **110-3, 110-4** can be turned "on" for as long as desired. When low-side FET **110-3** is in its "on" state, the potential at output **S2** is equal to the potential at source **S** of FET **110-3.** Likewise, the potential at output **S1** is equal to the potentiation at source **S** of FET **110-4** when the FET is in its "on" state.

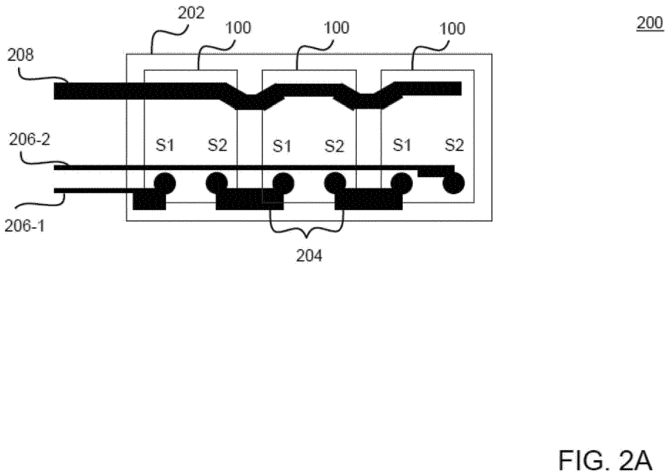

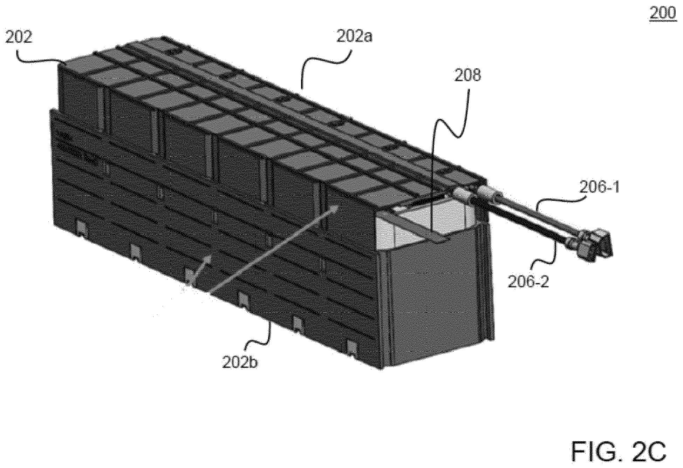

In some non-limiting embodiments or aspects, housing **202** may be configured to hold at least one (e.g., a plurality of, a set of, and/or the like) energy storage modules **100.** For example, as shown in FIG. 2A, housing **202** may be shaped to have three energy storage modules **100** uniformly distributed in an interior space defined by housing **202.** In some non-limiting embodiments or aspects, there may be any number of energy storage modules **100,** as described herein. For example, housing **202** may contain six energy storage modules **100,** nine energy storage modules **100,** twelve energy storage modules **100,** and/or the like.

In some non-limiting embodiments or aspects, bar connections **204** may connect energy storage modules **100** within housing **202.** For example, as shown in FIG. 2A, a first (e.g., left) bar connection **204** may connect second electrical connection **S2** of a first (e.g., left) energy storage module **100** to first electrical connection **S1** of a second (e.g., center) energy storage module **100,** and a second (e.g., right) bar connection **204** may connect second electrical connection **S2** of the second (e.g., center) energy storage module **100** to first electrical connection **S1** of a third (e.g., right) energy storage module **100.** As such, these energy storage modules **100** may be connected in series. In some non-limiting embodiments or aspects, energy storage modules 100 and/or bar connections **204** may be in other arrangements and/or have other connections (e.g., to connect energy storage modules **100** in series, in parallel, a combination of series and parallel connections, and/or the like, as described herein). In some non-limiting embodiments or aspects, bar connections **204** may include a conductive (e.g., electrically conductive) material, such as metal and/or the like.

In some non-limiting embodiments or aspects, electrical connections **206** may include a conductive (e.g., electrically conductive) material, such as metal and/or the like. For example, electrical connections **206** may include a wire, a cable, and/or the like. In some non-limiting embodiments or aspects, electrical connections **206** may allow for electrical connection between energy storage module container **200** (e.g., energy storage modules **100** within energy storage module container **200)** and external components (e.g., other components of the power supply system external to housing **202).**

In some non-limiting embodiments or aspects, first electrical connection **206-1** may be connected to first electrical connection **S1** of at least one energy storage module **100.** For example, first electrical connection **206-1** may be connected to first electrical connection **S1** of a first (e.g., left) energy storage module **100** (e.g., of a group of energy storage modules **100** connected in series). In some non-limiting embodiments or aspects, second electrical connection **206-2** may be connected to second electrical connection **S2** of at least one energy storage module **100.** For example, second electrical connection **206-2** may be connected to second electrical connection **S2** of a last (e.g., right) energy storage module **100** (e.g., of a group of energy storage modules **100** connected in series).

In some non-limiting embodiments or aspects, communication connection **208** may include at least one component that permits communication among other components. For example, communication connection **208** may include a bus connection (e.g., digital bus, such as controller area network bus (CAN-bus), isolated serial port Interface (isoSPI), any derivatives thereof, any combination thereof, and/or the like). In some non-limiting embodiments or aspects, communication connections **208** may allow for communicative connection between container energy storage modules **100** within energy storage module container **200** (e.g., module controllers **103** of such energy storage modules **100)** and external components (e.g., other components of the power supply system external to housing **202,** such as a system controller and/or the like). The system controller may provide a signal (e.g., command) via communication connection **208** to any of module controllers **103** for operating the switching elements **110** thereof (e.g., via one or more gate driver circuits) in a particular (e.g., controlled) manner.

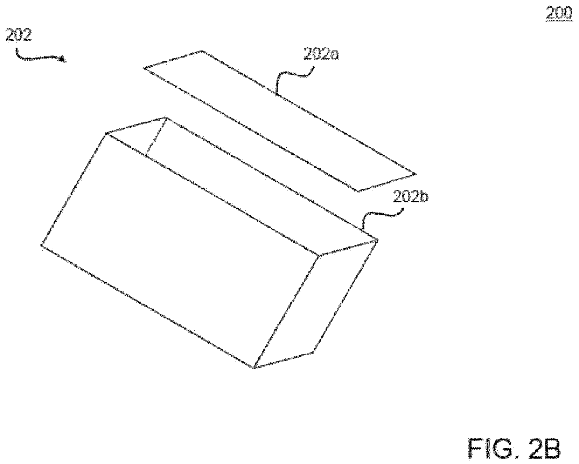

FIGS. 2B-2C provide schematic diagrams of an example energy storage module container 200 of energy storage modules, according to some non-limiting embodiments or aspects. As shown in FIGS. 2A-2C, energy storage module container **200** may include at least one energy storage module **100** (e.g., a plurality or energy storage modules **100,** a set of energy storage modules **100,** and/or the like of), housing **202** (e.g., including top cover **202a** and holder **202b),** bar connections **204,** first electrical connection **206-1** and second electrical connection **206-2** (collectively referred to as "electrical connections **206"** and individually referred to as "electrical connection **206"),** and/or communication connection **208.** The number and arrangement of components shown are provided as an example. In some non-limiting embodiments or aspects, energy storage module container **200** may include additional components, fewer components, different components, or differently arranged components than those shown. Additionally or alternatively, a set of components (e.g., one or more components) of energy storage module container **200** may perform one or more functions described as being performed by another set of components of energy storage module container **200.**

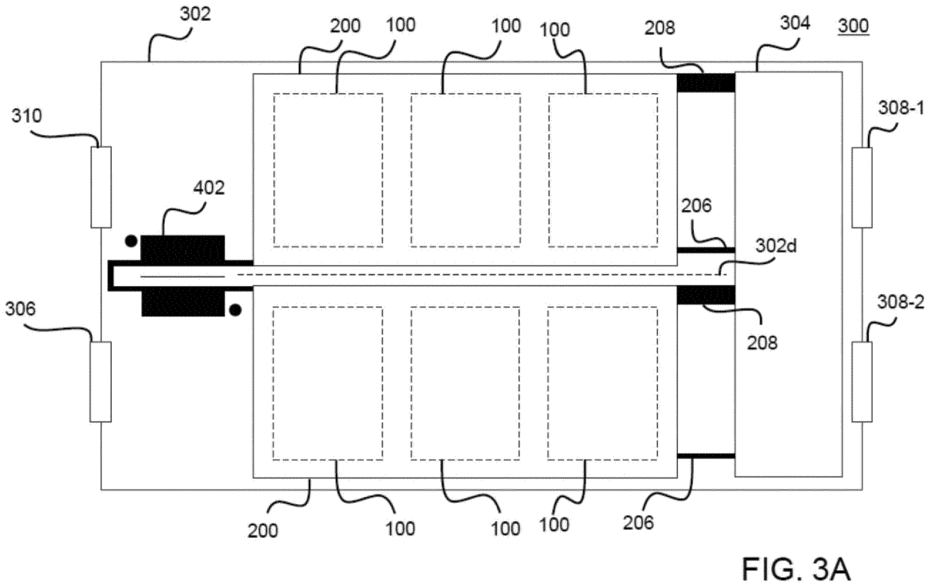

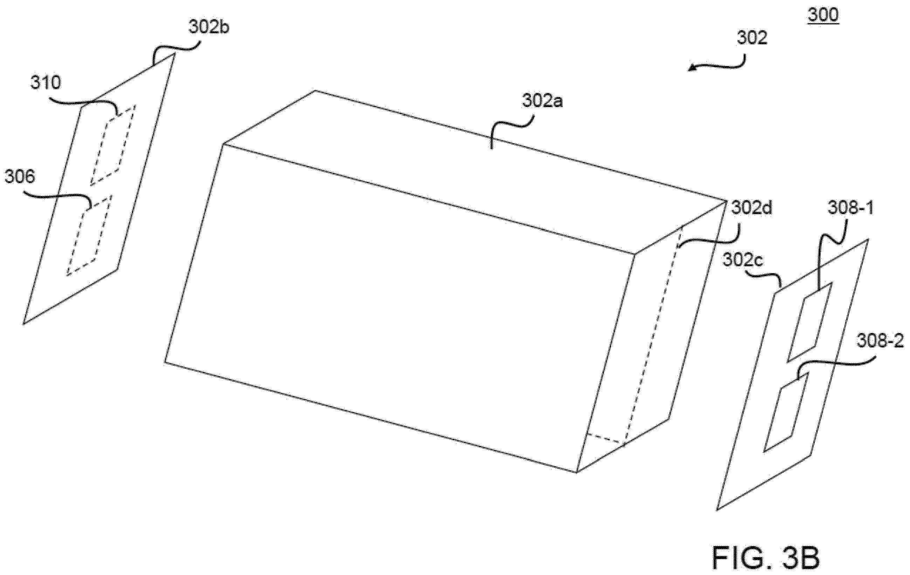

Referring now to FIGS. 3A and 3B, shown are schematic diagrams of an example electrical power system, shown here as a power supply system **300,** according to some non-limiting embodiments or aspects. As shown in FIGS. 3A and 3B, power supply system **300** may include at least one energy storage module container **200** (e.g., each including at least one energy storage module **100),** electrical connections **206,** communication connections **208,** housing **302,** system controller **304,** input connection **306,** at least one output connection (e.g., first output connection **308-1** and/or second output connection **308-2,** collectively referred to as "output connections **308,"** and individually referred to as "output connection **308"),** and/or choke **402.** In some non-limiting embodiments or aspects, power supply system **300** may also include communication connection **310.** For brevity and clarity, electrical connections **206** and communication connections **208** inside energy storage module container **200** are not shown in FIG. 3A, but energy storage module(s) **100** may be connected to electrical connections **206** and/or communication connections **208,** as described herein. For brevity and clarity, connections between energy storage module container **200** (and/or energy storage module(s) **100** thereof) and input connection **306,** output connection(s) **308,** and/or communication connection **310** are not shown in FIG. 3A, but energy storage module container **200** (and/or energy storage module(s) **100** thereof) may be connected to input connection **306,** output connection(s) **308,** and/or communication connection **310,** as described herein. For brevity and clarity, connections between system controller **304** and input connection **306,** output connection(s) **308,** and/or communication connection **310** are not shown in FIG. 3A, but system controller **304** may be connected to input connection **306,** output connection(s) **308,** and/or communication connection **310,** as described herein. The number and arrangement of components shown are provided as an example. In some non-limiting embodiments or aspects, power supply system **300** may include additional components, fewer components, different components, or differently arranged components than those shown. Additionally or alternatively, a set of components (e.g., one or more components) of power supply system **300** may perform one or more functions described as being performed by another set of components of power supply system **300.** For example, in some non-limiting embodiments or aspects, choke **402** may be included in and/or a part of system controller **304.**

In some non-limiting embodiments or aspects, housing **302** may include plastic, metal, any combination thereof, and/or the like. For example, housing **302** may include a metal housing, such as an aluminum housing.

In some non-limiting embodiments or aspects, housing **302** may be configured to hold at least one (e.g., a plurality of) energy storage container(s) **200** and/or at least one (e.g., a plurality of) energy storage modules(s) **100.** For example, housing **302** may be configured to hold two energy storage containers **200,** three energy storage containers **200,** four energy storage containers **200,** and/or the like. For the purpose of illustration, housing **302** may be configured to hold two energy storage containers **200,** each of which may hold twelve energy storage modules(s) **100** (e.g., a total of 24 energy storage modules(s) **100).** For the purpose of illustration, housing **302** may be configured to hold three energy storage containers **200,** each of which may hold eight energy storage modules(s) **100** (e.g., a total of 24 energy storage modules(s) **100).** Other non-limiting configurations are also possible, e.g., housing **302** may hold four energy storage containers **200,** each of which may hold six energy storage modules(s) **100** (e.g., a total of 24 energy storage module(s) **100).** For the purpose of illustration, housing **302** may be configured to hold two energy storage containers **200,** each of which may hold three energy storage modules(s) **100** (e.g., a total of 6 energy storage modules(s) **100).** In some non-limiting embodiments or aspects, energy storage container(s) **200** and/or energy storage module(s) **100** may be in other arrangements within housing **302.**

In some non-limiting embodiments or aspects, housing **302** may include a plurality of compartments separated by dividers **302d** (e.g., walls, barriers, and/or the like). For example, the number of compartments may be equal to the number of energy storage container(s) **200** (e.g., a respective compartment for each respective energy storage container **200).** Each compartment may be separated from the adjacent compartment(s) by a divider **302d.** For example, one divider **302d** may separate an interior space of housing **302** into two compartments, two dividers **302d** may separate an interior space of housing **302** into three compartments, and so on. In some non-limiting embodiments or aspects, divider **302d** may be part of housing **302** and/or may include the same material as housing **302** (e.g., aluminum, metal, plastic, and/or the like).

In some non-limiting embodiments or aspects, as shown in FIG. 3B, housing **302** may include body **302a,** first end cap **302b,** second end cap **302c,** and/or at least one divider **302d.** In some non-limiting embodiments or aspects, body **302a** and/or divider **302d** may include a first material (e.g., metal, such as aluminum), and first end cap **302b** and/or second end cap **302c** may include a second material (e.g., plastic). In some non-limiting embodiments or aspects, at least one of first end cap **302b** and/or second end cap **302c** may include the same material as body **302a** and/or divider **302d.** In some non-limiting embodiments or aspects, first end cap **302b** and second end cap **302c** may be configured to (e.g., sized and shaped to) cover openings at respective ends of body **302a.**

In some non-limiting embodiments or aspects, first end cap **302b** and/or second end cap **302c** may include (and/or may have a space to accommodate) input connection **306,** output connection(s) **308,** and/or communication connection **310.** For the purpose of illustration, as shown in FIG. 3B, input connection **306** and communication connection **310** may be located at first end cap **302b,** and output connections **308** may be located at second end cap **302c.** In some non-limiting embodiments or aspects, input connection **306,** output connection(s) **308,** and/or communication connection **310** may be in other arrangements. For example, all of input connection **306,** output connection(s) **308,** and communication connection **310** may be located at the same end cap (e.g., one of first end cap **302b** or second end cap **302c).** As another example, input connection **306** may be located at one end cap, and communication connection 310 and output connection(s) **308** may be located at the other end cap. As another example, input connection **306** and output connection(s) **308** may be located at one end cap, and communication connection **310** may be located at the other end cap. As another example, first output connection **308-1** may be located at one end cap, and second output connection **308-2** may be located at the other end cap.

In some non-limiting embodiments or aspects, system controller **304** may include a controller and associated circuitry. For example, system controller **304** may include a microcontroller, a computing device, a processor, a microprocessor, a digital signal processor (DSP), and/or any processing component (e.g., a field-programmable gate array (FPGA), an application-specific integrated circuit (ASIC), etc.) that can be configured to perform at least one function. In some non-limiting embodiments or aspects, system controller **304** may be communicatively connected to energy storage module container **200** and/or energy storage module(s) **100** (e.g., module controller(s) **103** thereof) by communication connection **208.** In some non-limiting embodiments or aspects, system controller **304** may be electrically connected to energy storage module container **200** and/or energy storage module(s) **100** (e.g., energy storage component(s) **102** thereof) by electrical connection(s) **206.** In some non-limiting embodiments or aspects, choke **402** may be included in and/or a part of system controller **304.**

In some non-limiting embodiments or aspects, input connection **306** may include at least one connector (e.g., at least one standardized electrical plug connector, e.g., for mains electric power and/or electrical devices compatible therewith). In some non-limiting embodiments or aspects, each output connection **308** may include at least one connector (e.g., at least one standardized electrical plug connector, e.g., for mains electric power and/or electrical devices compatible therewith). For example, first output connection **308-1** may include a connector (e.g., standardized electrical plug connector) suitable for 100-127 V (e.g., at a frequency of 60 Hz suitable for the United States of America, North America, etc.). For example, second output connection **308-2** may include a connector (e.g., standardized electrical plug connector) suitable for 200-240 V (e.g., at a frequency of 50 Hz suitable for the European Union, etc.). In some non-limiting embodiments or aspects, communication connection **310** may include at least one connector (e.g., at least one standardized communication plug connector). For example, communication connection **310** may include at least one of a universal serial bus (USB) connector (e.g., USB-A, USB-B, USB-C, USB power delivery (USB-PD), mini-USB, micro-USB, and/or the like), an ethernet connector, a coaxial cable connector, a pin connector, a CAN-bus connector, any combination thereof, and/or the like.

In some non-limiting embodiments or aspects, choke **402** may be electrically connected (e.g., coupled and/or the like) to energy storage module container(s) **200** and/or energy storage module(s) **100,** as described herein. For example, a first energy storage module container **200** and/or a first set of energy storage modules **100** may be connected to a first connection (e.g., first end, first winding, and/or the like) of choke 402, as described herein. Additionally or alternatively, a second energy storage module container **200** and/or a second set of energy storage modules **100** may be connected to a second connection (e.g., second end, second winding, and/or the like) of choke **402,** as described herein.

In some non-limiting embodiments or aspects, system controller **304** may command module controller(s) **103** of energy storage module(s) **100** to generate an output voltage based on a combination (e.g., sum and/or the like) of the respective module voltage of each respective energy storage module **100,** as described herein. For example, by sequentially connecting multiple energy storage module(s) **100** in series in a time-shifted manner, a combined (e.g., summed) voltage may approximate an AC voltage waveform having a target amplitude (e.g., a voltage substantially equal to the nominal voltage of mains electric power, such as 100-127 V, 200-240 V, an/dor the like) and/or a target frequency (e.g., a frequency substantially equal to the nominal frequency of mains electric power, such as 60 Hz, 50 Hz, and/or the like), as described herein.

In some non-limiting embodiments or aspects, system controller **304** may command module controller(s) **103** of energy storage module(s) **100** to cause a respective duty cycle of a respective module voltage of each respective energy storage module **100** to generate an output voltage based on a combination (e.g., sum and/or the like) of the respective module voltage of each respective energy storage module **100,** as described herein. For example, by modulating the duty cycle differently for multiple energy storage module(s) **100** connected in series, a combined (e.g., summed) voltage may approximate (e.g., better approximate) an AC voltage waveform having a target amplitude and/or a target frequency, as described herein. In some non-limiting embodiments or aspects, the duty cycle of the respective module voltage may relate to a switched voltage scheme such as a pulse-width modulation (PWM) type waveform. For example, system controller **304** may command module controller(s) **103** of energy storage modules **100** to switch their output voltage with certain frequency and/or duty-cycle. The exact number or range of the switching frequency is not essential to the scope or generality of the teachings of the present disclosure. As some non-limiting examples, the switching frequency of the system may be in the kHz range (1 kHz to 999 kHz). For example, the switching frequency and/or PWM frequency of the system may be between 40 kHz and 100 kHz. In some cases, the switching frequency and/or PWM frequency of the system may be at or around 90 kHz. In some non-limiting embodiments or aspects, module output may be switching (e.g., PWM) at a frequency between 1.5 kHz to 7.5 kHz. For example, module output may be switching (e.g., PWM) at a frequency between 3.5 kHz to 4.5 kHz. As a further example, module output may be switching (e.g., PWM) at a frequency at or around 3.75 kHz. As another example, module output may be switching (e.g., PWM) at a frequency at or around 4 kHz. In some non-limiting embodiments or aspects, the switching frequency or PWM frequency of the system may be proportional to a multiplication of the switching frequency and/or PWM frequency of the energy storage module **100** and the number of energy storage modules **100**. It shall be appreciated that duty cycle may be anywhere between 0% and 100%, e.g., depending on the time at which the respective energy storage modules **100** are being operated. For example, 0% duty cycle for a given energy storage module **100** may mean that the energy storage module **100** is instructed to be deactivated or in a bypass mode (energy storage module **100** not contributing to the output voltage, but still able to carry current), and 100% duty cycle may mean that that energy storage module **100** is instructed to be switched on or activated in a given polarity. For example, by sweeping the duty cycle of a given energy storage module **100** over time (e.g., between 0% and 100%), the effective output voltage of that energy storage module **100** can be more finely incremented or decremented between voltage steps associated with full switching between two consecutive energy storage modules **100**. Various energy storage modules **100** may be orchestrated, e.g., by system controller **304,** to generate an output voltage based on a combination of the respective module voltage of each respective energy storage module **100,** as described herein.

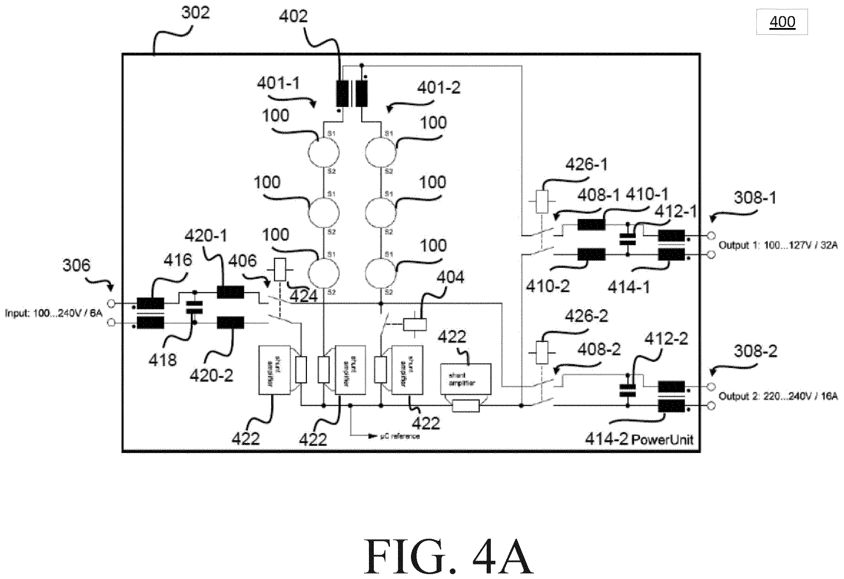

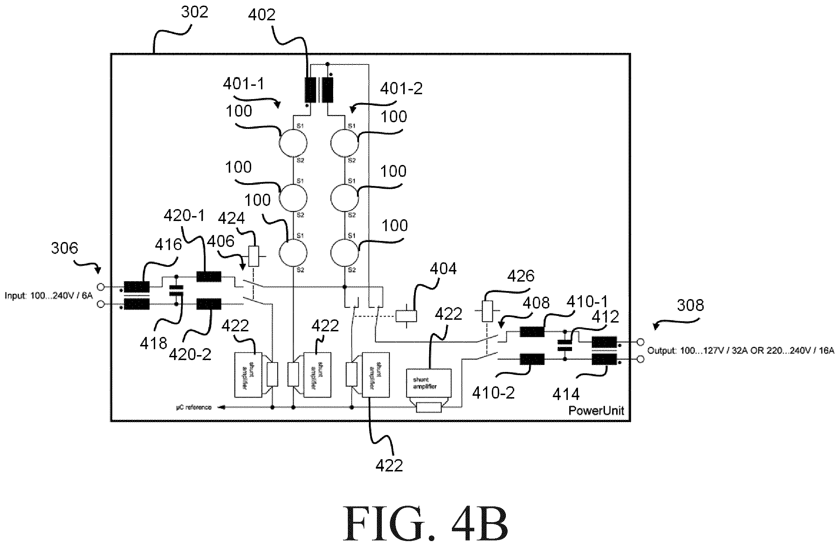

Referring now to FIG. 4A, shown is a circuit diagram of an example power supply system **400,** according to some non-limiting embodiments or aspects. The present solution is not limited to the circuit architecture shown in FIG. 4A. For example, certain components of the power supply system may be optional. The optional components can include, but are not limited to, components **308-2, 408-1, 412-2, 414-2.** FIG. 4B shows the power supply system without these components.

In some non-limiting embodiments or aspects, power supply system **400** may be the same as or similar to power supply system **300.** The number and arrangement of components shown are provided as an example. In some non-limiting embodiments or aspects, power supply system **400** may include additional components, fewer components, different components, or differently arranged components than those shown. Additionally or alternatively, a set of components (e.g., one or more components) of power supply system **400** may perform one or more functions described as being performed by another set of components of power supply system **400.**

In some non-limiting embodiments or aspects, as shown in FIG. 4, input connection **306** may be connected to input choke **416.** Input choke **416** may be connected to input capacitor **418** and/or at least one input inductor (e.g., first input inductor **420-1** and/or second input inductor **420-2,** collectively referred to as "input inductors **420,"** and individually referred to as "input inductor **420").** For example, input choke **416** may be provided for electromagnetic compatibility (EMC) reasons. Similarly, input capacitor **418** may be provided as an EMC capacitor (and/or class-X capacitor), which may stabilize the input voltage and/or make the input less impedant at higher frequencies. For example, input inductor(s) **420** may be used to operate the electrical system **400** in a controlled current mode.

In some non-limiting embodiments or aspects, first output connection **308-1** may be connected to first output choke **414-1.** First output choke **414-1** may be connected to at least one of capacitor **412-1** and/or inductors **410.**

In some non-limiting embodiments or aspects, second output connection **308-2** may be connected to second output choke **414-2.** Second output choke **414-2** may be connected to capacitor **412-2.**

In some non-limiting embodiments or aspects, each of the chokes (e.g., input choke **416,** first output choke **414-1,** and/or second output choke **414-2)** may be common-mode chokes and/or the like, e.g., used for EMC performance. It shall be appreciated that further discussion of EMC inductors or capacitors is not essential to the scope or generality of the present teachings.

In some non-limiting embodiments or aspects, input switch **424** may selectively connect and/or disconnect input **406** from first set **401-1** and second set **401-2** of energy storage modules **100.** In some non-limiting embodiments or aspects, to operate in a third mode of operation (e.g., a charging mode of operation) input switch **424** at input **406** may be switched to a first state (e.g., closed, activated, and/or the like). For example, switching input switch **424** to the first state (e.g., closed, activated, and/or the like) may allow current to flow from input connection **306** through input **406** to first set **401-1** and second set **401-2** of energy storage modules **100** (e.g., to charge energy storage modules **100).** In some non-limiting embodiments or aspects, a power source (e.g., mains electric power, generator power, renewable power (e.g., solar, wind, and/or the like), and/or the like) may be connected to input connection **306.** In some non-limiting embodiments or aspects, system controller **300** may control module controllers of energy storage modules **100** to charge energy storage components **102** thereof (e.g., based on power from the power source).

In some non-limiting embodiments or aspects, to discontinue the third mode of operation (e.g., stop charging) and/or to prevent current from flowing to input connection **306** when power supply system **400** is not in the third (e.g., charging) mode of operation, input switch **424** at input **406** may be switched to a second state (e.g., open, deactivated, and/or the like).

In some non-limiting embodiments or aspects, at least one output switching element (e.g., first output switch **426-1** and/or second output switch **426-1,** collectively referred to as "output switches **426,"** and individually referred to as "output switch **426"**) may selectively connect and/or disconnect outputs **408** from first set **401-1** and second set **401-2** of energy storage modules **100**.

In some non-limiting embodiments or aspects, to operate in the first mode of operation, in addition to switching of switch **404** to a first state (e.g., closed, activated and/or the like), first output switch **426-1** may be switched to a first state (e.g., closed, activated and/or the like). For example, this may allow current to flow from first set **401-1** and second set **401-2** of energy storage modules **100** through first output **408-1** (and inductors **410** and/or capacitor **412-1**) to first output connection **308-1** (e.g., to supply power to a load connected to first output connection **308-1**). In some non-limiting embodiments or aspects, to prevent current from flowing to first output connection **308-1** when power supply system **400** is not in the first mode of operation, first output switch **426-1** may be switched to a second state (e.g., opened, deactivated and/or the like).

In some non-limiting embodiments or aspects, to operate in the second mode of operation, in addition to switching of switch **404** to a second state (e.g., opened, deactivated and/or the like), second output switch **426-2** may be switched to a first state (e.g., closed, activated and/or the like). For example, this may allow current to flow from first set **401-1** and second set **401-2** of energy storage modules **100** through second output **408-2** (and capacitor **412-2**) to second output connection **308-2** (e.g., to supply power to a load connected to second output connection **308-2**). In some non-limiting embodiments or aspects, to prevent current from flowing to second output connection **308-2** when power supply system **400** is not in the second mode of operation, second output switch **426-2** may be switched to a second state (e.g., opened, deactivated and/or the like).

In some non-limiting embodiments, the first mode of operation and the second mode of operation may be used to provide multi-voltage operation via the power supply system **400**. For example, in the first mode of operation, the first set **401-1** and second set **401-2** of energy storage modules **100** may be connected in parallel, while in the second mode of operation, the first set **401-1** and second set **401-2** of energy storage modules **100** may be connected in series. It shall be appreciated that the first mode of operation may be provide an output voltage which is lower than the output voltage provided in the second mode of operation, however the output current provided in the first mode of operation may be larger than the output current provided in the second mode of operation. For example, the first mode of operation may provide an 110 V output, while the second mode of operation provides a 220 V output. This can advantageously allow the power supply system **400** for multi-voltage domain operation. For example, 110 VAC mains voltage domain is predominantly used in the US, while 220 VAC mains voltage domain is used in Europe. The power supply system **400** can thus allow flexibility in using electrical appliances rated for any of the voltage domains. A particular advantage of the shown configuration can be that output power can be similar or identical in either mode. For example, assuming identical sets **(401-1** and **401-2)** operating identically, output current in the first mode can be double of the output current in the second mode even though the output voltage in the first mode is half of the output voltage in the second mode. This can allow similar power levels to be used despite the voltage domain which the power supply system **400** output is operating in. The examples of 110 V and 220 V are non-limiting to the teachings as any voltage domain, or operating frequency can be realized with the present structure. Moreover, it is not limiting to have the two domains which are related by an integer factor to each other in terms of voltage and/or current. It shall be appreciated the operating cycle (e.g., order of plurality of modules) can be adapted according to the operating mode of the power supply system **400**.

In some non-limiting embodiments or aspects, each of input switch **424** and output switches **426** may include at least one of a switch, a contactor, a transistor, any combination thereof, and/or the like. For example, each of input switch **424** and output switches **426** may include at least one of an SPST switch, a DPDT switch, an SPDT switch, a DPST switch, any combination thereof, and/or the like. For example, each of input switch **424** and output switches **426** may include at least one of a DPDT switch or a DPST switch. For the purpose of illustration, as shown in FIG. 4, each of input switch **424** and output switches **426** may include a DPST switch or a DPDT switch.

In some non-limiting embodiments or aspects, power supply system **400** may include current sensors **422,** which may be in communication with system controller **304** (e.g., a microcontroller). In some non-limiting embodiments or aspects, each current sensor **422** may include a shunt amplifier. For example, each shunt amplifier may refer to a common potential (e.g., reference voltage), to which system controller **304** (e.g., a microcontroller) also may refer. In some non-limiting embodiments or aspects, at least some (e.g., all, a subset, and/or the like) of current sensors **422** may be any other suitable type of current sensor. For example, a current sensor **422** may include measuring voltage drop across a resistor connected in series (e.g., to at least one of first set **401-1** and/or second set **401-2** of energy storage modules **100),** e.g., to measure the current flowing through the resistor (and/or any component in series with the resistor). In some non-limiting embodiments or aspects, at least one current sensor **422** may be of a different type than another current sensor **422**. For example, a current sensor **422** connected to of first set **401-1** of energy storage modules **100** may be of a different type than another current sensor **422** connected to second set **401-2** of energy storage modules **100**.

In some non-limiting embodiments or aspects, by measuring current at locations of current sensors **422,** the following may be measured (e.g., by system controller **304** and/or the like): output current (e.g., in a redundant manner), input current (e.g., in a redundant manner), circular current (e.g., if strings are connected in parallel). In some non-limiting embodiments or aspects, current sensors may measure current flowing through each of first set **401-1** and second set **401-2** of energy storage modules **100.** As such, relative measurements may be performed to detect if a circular (e.g., loop) current is flowing between first set **401-1** and second set **401-2** of energy storage modules **100.** In other words, such relative measurements may be used to detect that the load current is divided evenly between the sets. Such measurements also may be used for orchestrating the operation of energy storage modules **100,** e.g., in such a manner that the circular (e.g., loop) current may be reduced (e.g., eliminated). Additionally or alternatively, such orchestration may also include disabling certain energy storage modules **100** in any of sets **401,** even if such disabling causes an unequal number of active energy storage modules **100** between the sets **401.** This may help running the system **400,** for example, even if energy storage modules **100** between sets **401** have different charge levels. Additionally or alternatively, such orchestration may include first module voltages of first set **401-1** being interleaved with second module voltages of second set **401-2.** Interleaving of the module voltages can be done by phase shifting output voltage of one set with respect to the output of the other set. Additionally or alternatively, such orchestration may include tolerating, or even in some non-limiting embodiments or aspects, creating, an imbalance in voltages between the first set **401-1** and the second set **401-2.** This may result in the loop current which tends to flow from one set **401** to the other set **401** to be a low frequency current which can be used, e.g., to equalize state of charge between the two sets **401.** Choke **402,** even in such non-limiting embodiments or aspects, may block the high frequency currents, but may allow low frequency or DC current to flow from the set **401** having a higher voltage than the other set **401.** As such, power supply system **400** may be more robust, flexible, and balanced. In some non-limiting embodiments or aspects, current sensors **422** may be leveraged for making absolute measurements, such as determining total current flowing through first set **401-1** and/or second set **401-2** of energy storage modules **100.** It shall be appreciated that said imbalance may be caused by unequal number of energy storage modules **100** operating in one set **401** as compared to the number of energy storage modules **100** operating in the other set **401.** Additionally or alternatively, the imbalance may be due to unequal charge level between the two sets **401.** Similarly, the power supply system **400** may also include circuit for voltage measurement in one or more networks of the power supply system **400.** It is neither essential nor limiting to the present disclosure to specify which voltage measurement circuit or scheme must be used.

It should be noted that the second output circuitry **408-2, 412-2, 414-2, 426-2, 308-2** may be optional. Accordingly, the present solution is discussed below in relation to the first output circuitry **408-1, 410-1, 410-2, 412-1, 414-1, 426-1, 308-1.** The present solution will also be discussed in relation to the input circuitry **306, 416, 418, 420-1, 420-2.** The particulars of the present solution will become evident as the discussion progresses.

As discussed above, the power supply system **300, 400** may comprise a buck-type inverter implemented as a modified cascaded H-bridge (MCHB) inverter. The MCHB inverter comprises the transistor active bridge circuits **144** of the energy storage modules **100** and the coupled inductor. Each H-bridge of the transistor active bridge circuits **144** may be referred to herein as an inverter. The power supply system is configured to operate in a first mode and a second mode. In the first mode, the MCHB inverter is operated in a current-controlled manner. The first mode may be employed, for example, when battery cells in a plurality of energy storage modules **100** are charging while the MCHB inverter terminals are connected to an AC-input **306** of the power supply system. In the second mode, the MCHB inverter is operated in a voltage-controlled manner. The second mode may be employed, for example, when power is being supplied (e.g., 120V or 240V) to another device coupled to an AC-output **308-1** or **308-2** of the power supply system by further connecting the MCHB inverter terminals to said AC-output.

All modes of operation may be governed by a high order control loop characterized in that: (i) there is at least one complex-conjugate pole pair below the unity loop gain frequency (ULGF) but well above DC and also well above the output voltage/current frequency of 50/60Hz (e.g., at 350Hz for voltage and 100 Hz for current); (ii) there is at least one real zero well above the pole frequency and well below the unity gain frequency thereby compensating the roll-off of at least one pole thereby ensuring stable operation; and (iii) there is a scheme for partially saturating the integrating elements in order to tackle problems arising from conditional stability. The complex-conjugate pole pair may be implemented as a second order low pass filter. Item (ii) may refer to a response of a second order low pass filter that meets (e.g., is equal to or is additively combined with) another response of a lower order at some frequency.

The high-order voltage control loop is configured to govern the instantaneous output voltage of the MCHB inverter. The inverter takes a 'command voltage' as input value and determines a duty cycle for the switching stages based on energy storage module data. The energy storage module data can include, but is not limited to, battery data. However, errors may occur in this process since (besides other effects) the battery cells (and other components in the power path) come with a parasitic resistance that causes the actual output voltage to be distorted by a voltage drop caused by a load current. The difference between a desired voltage and the actual voltage is considered an error signal. The task of the high-order voltage control loop is to shape the error signal in the frequency domain. Spectral energy of the error signal below unit loop gain frequency (ULGF) will be shifted to frequencies above ULGF.

Voltage Loop

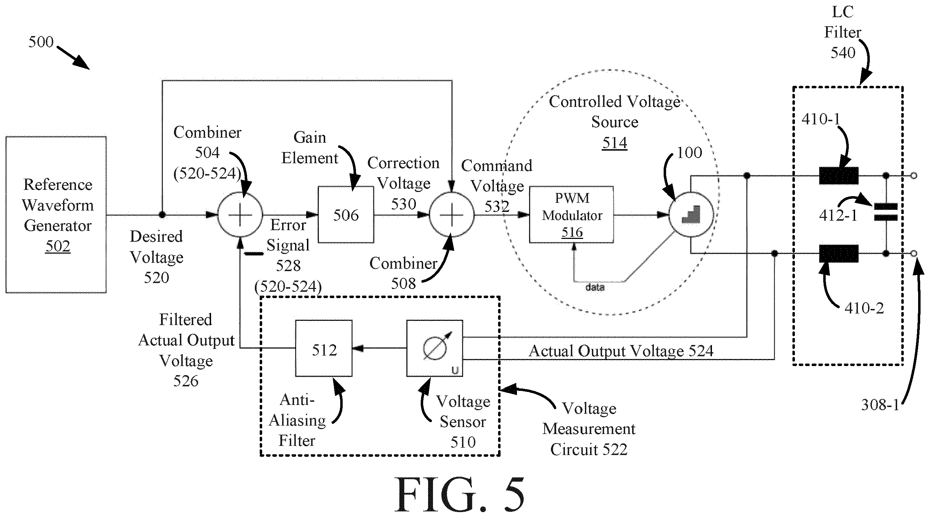

FIG. 5 provides a circuit diagram of a high-order voltage control loop (HOVCL) **500.** Pursuant to a non-limiting aspect of the present teachings, HOVCL **500** is provided to compensate for the non-idealities in the system. For example, effects of parasitic resistance to the output voltage of energy storage module(s) **100** when load current is being drawn. This inner parasitic resistance is not well defined because it depends on age, state of charge, etc. In such cases, the HOVCL **500** is provided to stabilize the output voltage of each energy storage module(s) **100** by ensuring that it is similar to a reference waveform. In effect, the system can draw any amount of load current without having any or a minimal amount of change in its output voltage. In this way, the HOVCL **500** can compensate for the inner parasitic resistance, and effectively reduce its effects to be eliminated or be relatively small.

HOVCL **500** comprises a controlled voltage source (CVS) **514**. CVS **514** comprises a PWM modulator **516** that is configured to consume a command voltage **532** and battery data in order to determine the right PWM drive signals (duty cycle) for the energy storage module in **100**. In **100,** the PWM signals are combined with the battery pack voltage(s) resulting in an actual output voltage - of which the average within one PWM cycle is equal to the command voltage. The actual output voltage is passed to an LC circuit **540** for filtering thereof prior to being provided to a load (not shown) that is connected to output terminals **308-1.**

In some scenarios, the desired output voltage may be, for example, 60 V and the energy storage cell may have, for example, 100 V of battery voltage. The PWM modulator **516** determines that, in order to provide the 60 V output, the energy storage cell **100** is to be ON or connected for 60% of a cycle or timeslot, and is to be OFF or disconnected for the remaining 40% of the cycle or timeslot. In an ideal case, the energy storage module **100** produces 60 V at its output. However, current is drawn from the voltage source when a load is connected to the output terminals **308-1.** This causes the output voltage of the energy storage module **100** to be lowered. Thus, HOVCL **500** comprises additional components **504, 506, 508, 522** to address this issue by adjusting a desired voltage waveform by the actual output voltage to compensate for the lowering of the voltage due to the current draw. The present solution is not limited to the particulars of this scenario.

As shown in FIG. 5, a reference waveform generator (RWG) **502** is configured to generate a desired voltage or reference waveform signal **520** as, for example, a sinusoidal waveform that is fed forward in a first path to an input of the CVS **514**. This ensures that even if the output of a gain element (GE) **506** is saturated to a predetermined value the output voltage of the energy storage module **100** will more or less follow an output voltage of the RWG **502**.

A voltage measurement circuit (VMC) **522** acquires an actual output voltage **524** of the energy storage module **100** (before being filtered by the LC filter **540**) and applies anti-aliasing filtering (AAF) at block **512** thereto to generate a filtered actual output voltage **526**. A voltage sensor **510** may be provided for measuring voltage and converting the measured voltage into another voltage. Operations of blocks **510, 512** may be performed by a single components rather than two components as shown in FIG. 5.

The desired voltage **520** and the filtered actual output voltage **526** are passed to a combiner **504**. The combiner **504** performs operations to subtract the filtered actual output voltage **526** from the desired voltage **520.** The result from this subtraction operation is referred to as error signal **528**. The error signal **528** is passed to GE **506**.

The GE **506** performs operations to apply a filtering function to the error signal **528** to generate a correction voltage or signal **530**. The filter function may amplify low-frequency portions of the error signal and attenuate high-frequency portions of the error signal. It should be noted that the HOVCL is preferably conditionally stable which means that it will not oscillate under normal conditions. However, when overdriven, the HOVCL may oscillate randomly. In this regard, the GE **506** amplifies the error signal **528** for low frequency in a way that for the overall loop there is a frequency at which the open loop gain is unity (ULGF) and magnitude (e.g., absolute value) of phase shift is less (e.g., significantly less) than -180°.

The correction voltage **530** is then added to the desired voltage **520** by combiner **508** to produce command voltage or control signal **532**. Command voltage **532** is passed to an input of the PWM modulator **516** of the CVS **514.**

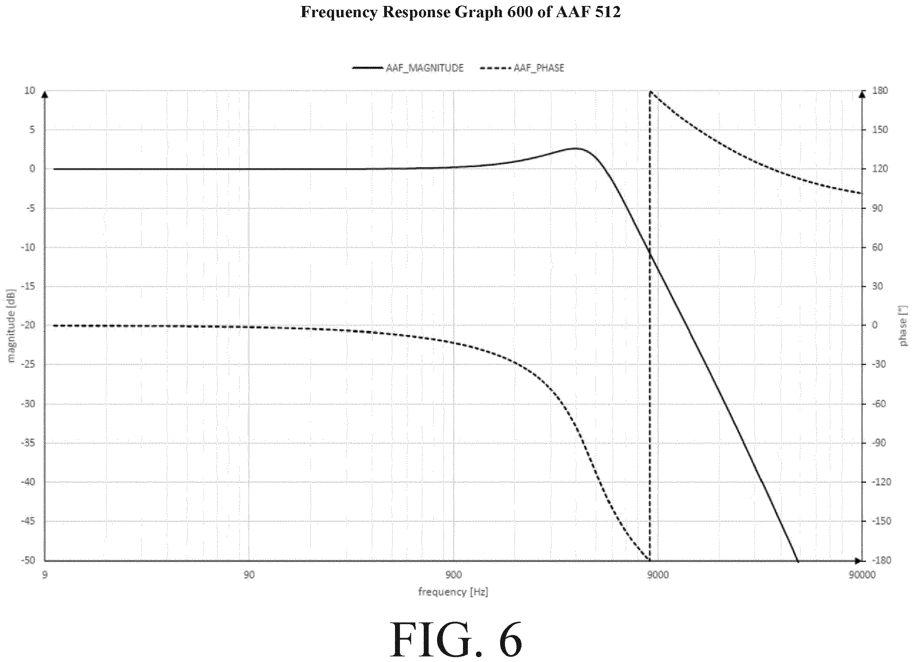

In some scenarios, the HOVCL may operate in a digital domain. In this regard, the signal is band-limited in order to meet the Nyquist criterion (AAF-aspect). This is achieved using an analog filter of third order for the AAF **512**. The components may be tuned in accordance with a particular application. For example, the components may be tuned so that the filter response meets the following requirements: 50dB damping at the Nyquist frequency of 45 kHz; max. overshoot < 3dB; phase error at 60 Hz < 1°; and gain such that 1 *digit* (of 12-bit ADC) equals 221.6 mV. An illustrative frequency response of the AAF **512** is shown in graph **600** of FIG. 6.

In order to maximize computational efficiency, the transfer function of GE **506** may comprise a linear combination of digital integrators. On some processors, the digital integrators may be executed in one instruction cycle using a MAC-operation. Each digital integrator comprises a defined gain which adjusts an integration time constant. Operations of the digital integrator can be defined by the following mathematical equation (1).

$$H(z) = \frac{\frac{k_i}{f_s}}{1 - z^{-1}}$$

$$(1)$$

in z-domain notation, where $k_i$ represents an integrator gain, $f_s$ represents the sampling frequency. The sampling frequency $f_s$ can be selected in accordance with any application. For example, the sampling frequency $f_s$ is selected as 90 kHz. The present solution is not limited to the particulars of this example. $z$ is defined by the following mathematical equation (2).

$$z = e^{jw} \tag{2}$$

where $j$ represents the imaginary unit and $w$ is defined by the following mathematical equation (3).

$$w = 2\pi(f/f_s) \tag{3}$$

where $f$ represents a frequency. By using the identity $z = e^{jw}$ and $w = 2\pi(f/f_s)$, it is possible to determine a real-world frequency response of the digital integrator that is measurable using a gain-phase-analyzer.

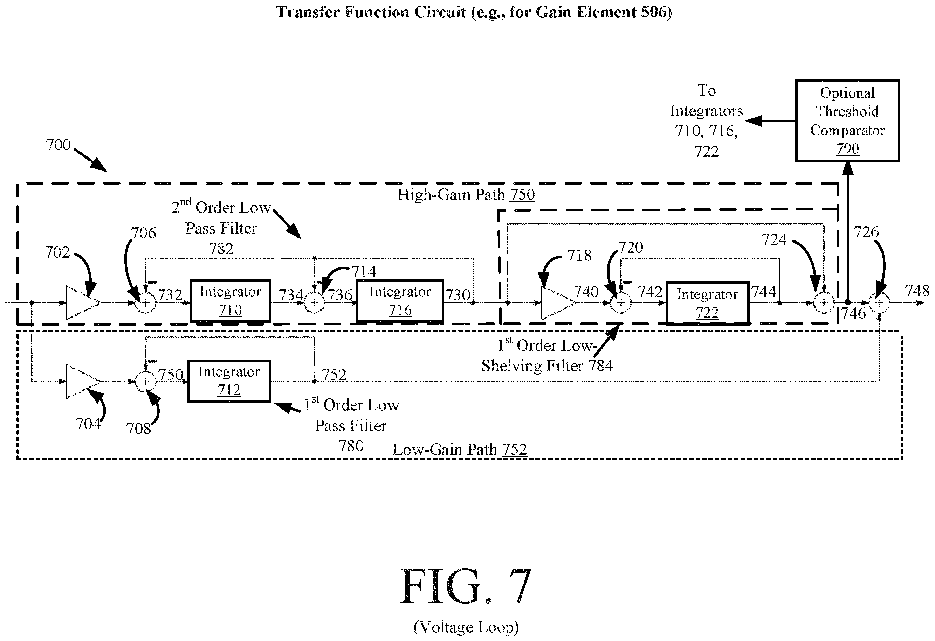

FIG. 7 provides a circuit diagram of an illustrative architecture for a transfer function circuit **700** of a GE (e.g., GE **506** of FIG. 5). Transfer function circuit **700** comprises two paths or branches **750, 752** of signal processing. The paths or branches include a high-gain path **750** and a low-gain path **752**. The high-gain path **750** comprises amplifiers **702, 718**, a second order low pass filter **782**, a first order low-shelving filter **784**, and combiner **724**. Combiner **726** is not part of the high-gain path **750** or the low-gain path **752**. The second order low pass filter **782** comprises combiners **706, 714** and integrators **710, 716**. The first order low-shelving filter **784** comprises amplifier **718**, combiners **720, 724** and integrator **722**. The low-gain path **752** comprises an amplifier **704** and a first order low pass filter **780**. The first order low pass filter **780** comprises a combiner **708** and an integrator **712**. A direct path is also provided around the first order low-shelving filter **784**.

Operations of the first order low pass filter **780** can be defined by the following mathematical equations (4)-(6).

$$H = Y/X = A/(1 + A) \tag{4}$$

$$A = A(z) = (k_i/f_s)(1/(1 - z^{-1})) \tag{5}$$

Setting mathematical equation (5) into mathematical equation (4) and simplifying gives mathematical equation (6).

$$H(z) = (k_i/f_s)/((k_i/f_s) + 1 - z^{-1}) \tag{6}$$

The first order low-shelving filter **784** adds a band limited amplification to the second order low-pass filter path (**782**) (e.g., to apply a gain of one). In this regard, the first order low-shelving filter **784** provides unity response (e.g., neither amplification nor attenuation) for high frequency components, amplification for low frequency components, and first order roll-off (e.g., -20 dB/decade) for intermediary frequency components. Operations of the first order low-shelving filter **784** may be defined by mathematical equation (7).

$$H(z) = G \cdot ((k_i/f_s)/((k_i/f_s) + 1 - z^{-1})) + 1 \tag{7}$$

G represents the amplification value of amplifier **718**.

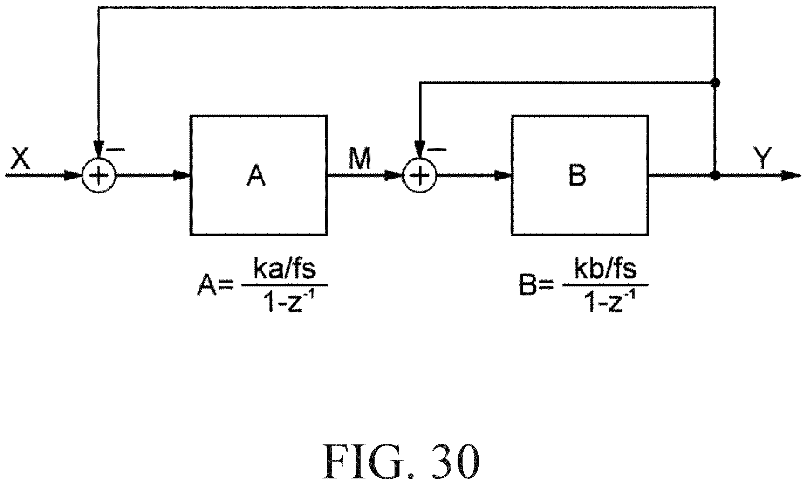

Operations of the second order low pass filter **782** may be defined by the following mathematical equations (8)-(16), which can be understand with reference to FIG. 30.

$$H = Y/X \tag{8}$$

$$Y = M \cdot (B/(1 + B)) \tag{9}$$

$$M = A \cdot (X - Y) \tag{10}$$

Setting mathematical equation (10) into mathematical equation (9) provides mathematical equation (11).

$$Y = (A \cdot (X - Y)) \cdot (B/(1 + B)) \tag{11}$$

Solving for Y provides:

$$Y = (A \cdot B \cdot X) / ((A \cdot B) + (B + 1)) \tag{12}$$

Setting mathematical equation (12) into mathematical equation (8) provides mathematical equation (13).

$$H = (A \cdot B) / ((A \cdot B) + (B + 1)) \tag{13}$$

$$A = A(z) = (k_{i,A}/f_s)(1/(1 - z^{-1})) \tag{14}$$

$$B = B(z) = (k_{i,B}/f_s)(1/(1 - z^{-1})) \tag{15}$$

By setting mathematical equations (14) and (15) into mathematical equation (13) and simplifying, mathematical equation (16) is obtained.

$$H(z) = ((k_{i,A}/f_s)(k_{i,B}/f_s)) / (z^{-2} - ((k_{i,B}/f_s) + 2)z^{-1} + ((k_{i,A}/f_s)(k_{i,B}/f_s) + (k_{i,B}/f_s) + 1)) \tag{16}$$

During operation, an input voltage signal (e.g., error signal **528** of FIG. 5) is passed to amplifier **702** of the high-gain path **750** and amplifier **704** of the low-gain path **752**. Both amplifiers **702, 704** perform operations to multiply the input voltage signal by a gain value. For example, in some scenarios, the gain value of amplifier **702** is selected to be eleven and the gain value of amplifier **704** is selected to be five. The present solution is not limited to the particulars of this example.

With regard to the low-gain path **752**, the input voltage signal is amplified and passed to the first order low pass filter **780**. The first order low pass filter **780** performs low pass filtering with a transfer function. In this regard, the amplified command voltage is passed to combiner **708**. The combiner **708** subtracts an output voltage signal **752** of integrator **712** from the command voltage signal to obtain a combined voltage signal **750**. Voltage signal **750** is passed to integrator **712**. The integrator **712** performs operations defined by mathematical equations (1) to obtain an integral of the voltage signal **750** over a frequency range based on the circuit time constant. Integrator **712** has a value for parameter $k_i$ that is selected in accordance with an application. For example, in some scenarios the value of $k_i$ for integrator **712** is selected to be two thousand. The present solution is not limited to the particulars of this example. The voltage signal **752** is passed to combiner **726** of the high-gain path **750**.

With regard to the high-gain path **750**, the input voltage signal is amplified by amplifier **702** and passed to the second order low pass filter **782**. The second order low pass filter **782** performs low pass filtering with transfer functions. In this regard, the amplified command voltage is passed to combiner **706**. It should be noted that, with reference to above mathematical equations (8)-(16), **Y** equals the feedback signal **730** divided by **X**, where **X** resembles the input signal to the second order filter structure. **Y** is input into combiner **706**. Combiner **706** subtracts its input from the command voltage to obtain combined signal **732**. Combined signal **732** is passed to an input of integrator **710**. Integrator **710** performs operations defined by mathematical equation (1) to obtain an integral of the voltage signal **750** over a frequency range based on the circuit time constant. Integrator **710** has a value for parameter $k_i$ that is selected in accordance with an application. For example, in some scenarios, the value of $k_{i,A}$ for integrator **710** is selected to be five thousand. The present solution is not limited to the particulars of this example. The output voltage signal **734** of integrator **710** is passed to a next combiner **714** of the second order low pass filter **782**. Combiner **714** subtracts the feedback signal **730** from the output voltage signal **734** of integrator **710** to obtain a combined voltage signal **736**. Combined voltage signal **736** is passed to integrator **716**. Integrator **716** performs operations defined by mathematical equation (1) to obtain an integral of the combined voltage signal **736** over a frequency range based on the circuit time constant. Integrator **716** has a value for parameter $k_{i,B}$ that is selected in accordance with an application. For example, in some scenarios, the value of $k_i$ for integrator **710** is selected to be six hundred and sixty six. The present solution is not limited to the particulars of this example. The output voltage signal **730** of integrator **716** is not only fed back to combiner **732**, but is also passed forward to amplifier **718** and combiner **724** in the high-gain path **750**.

Amplifier **718** performs operations to multiply the incoming waveform by a gain value. The gain value can be selected in accordance with an application. For example, the gain value is selected to be four. The present solution is not limited to the particular of this example. The output voltage signal **740** of amplifier **718** is passed to the component **720** of the first order low-shelving filter **784**. Components **720, 722** perform low pass filtering with a transfer function. Combiner **720** subtracts an output voltage signal **744** of integrator **722** from the output voltage signal **740** of amplifier **718** to obtain combined voltage signal **742**. Voltage signal **742** is passed to an input of integrator **722**. Integrator **722** performs operations defined by mathematical equation (1) to obtain an integral of the combined voltage signal **742** over a frequency range based on the circuit time constant. Integrator **722** has a value for parameter $k_i$ that is selected in accordance with an application. For example, in some scenarios, the value of $k_i$ for integrator **710** is selected to be one thousand. The present solution is not limited to the particulars of this example. The output voltage signal **744** of integrator **722** is not only fed back to combiner **720,** but is also passed forward to an input combiner **724** in the high-gain path **750**.

Combiner **724** adds the output voltage signal **730** of the second order low pass filter **782** (or integrator **716**) to the output voltage signal **744** of the integrator **722**. The output voltage signal **746** of the high-gain path **750** (or combiner **724**) is passed to an input of a next combiner **726**. Combiner **726** adds the output voltage signal **752** of the low-gain path **752** to output voltage signal **746** of the high-gain path **750** to generate voltage signal **748** which is output from the transfer function circuit **700**.

The transfer function circuit **700** may also optionally comprise a threshold comparator **790** connected to the output of integrator **716**. The threshold comparator **790** is configured to compare the signal **746** to a threshold value. A result of this comparison operation is provided to integrators **710** and **716** for use in controlling operations thereof.

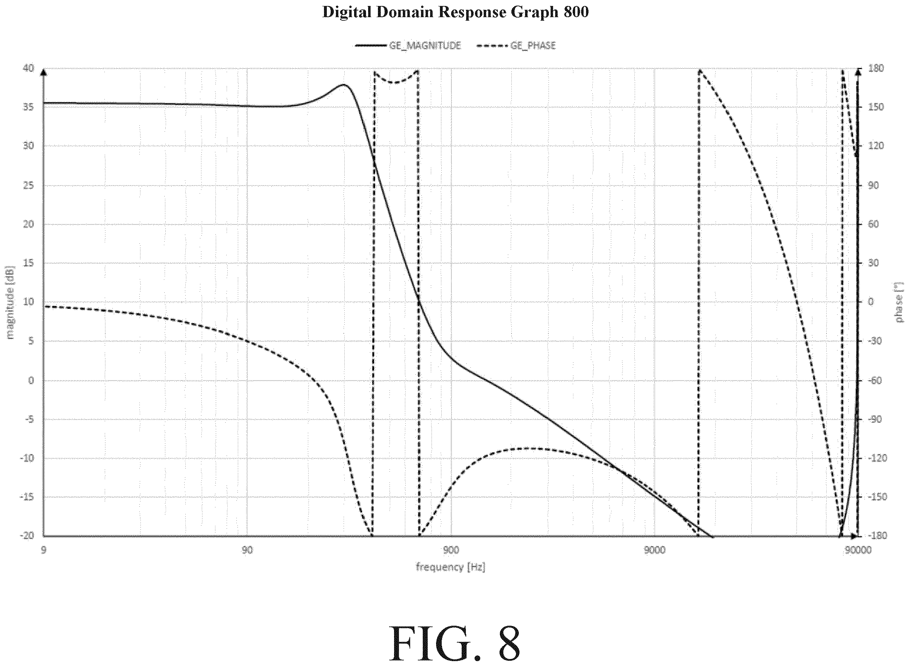

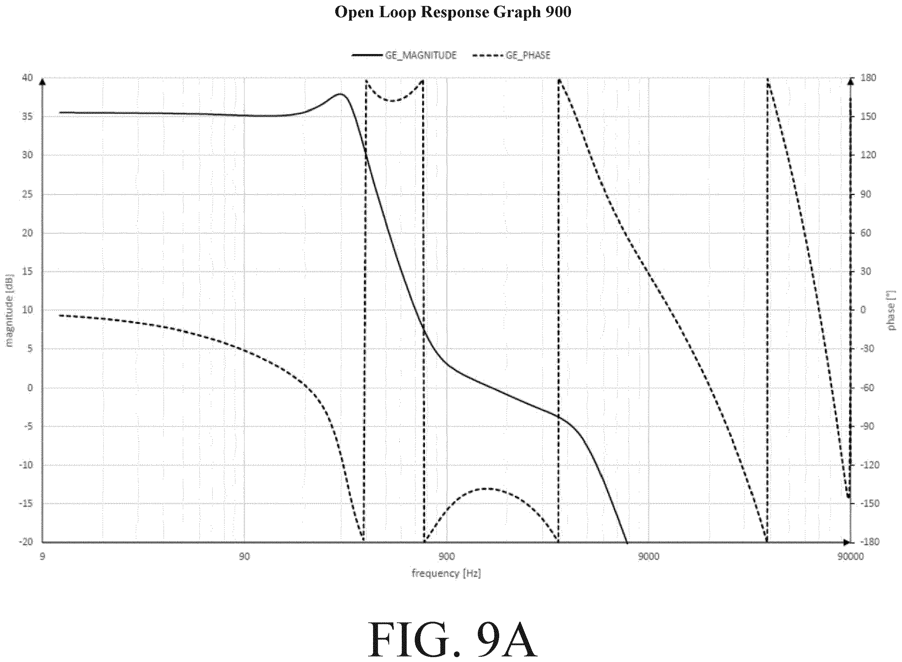

An illustrative response of the digital domain parts **502-516** of high-order voltage control loop **500** is shown in graph **800** of FIG. 8. The open loop response of circuit **500** with **700** inside **560** is to be derived by multiplying the transfer functions of FIG. 6 and FIG. 8 in the frequency domain. The open loop response is shown by graph **900** of FIG. 9A. As can be seen in FIG. 9A, ULGF is around 1.5 kHz. A phase margin is around 40°. A gain margin is around 4dB, and a loop gain is 35dB below 350 Hz.

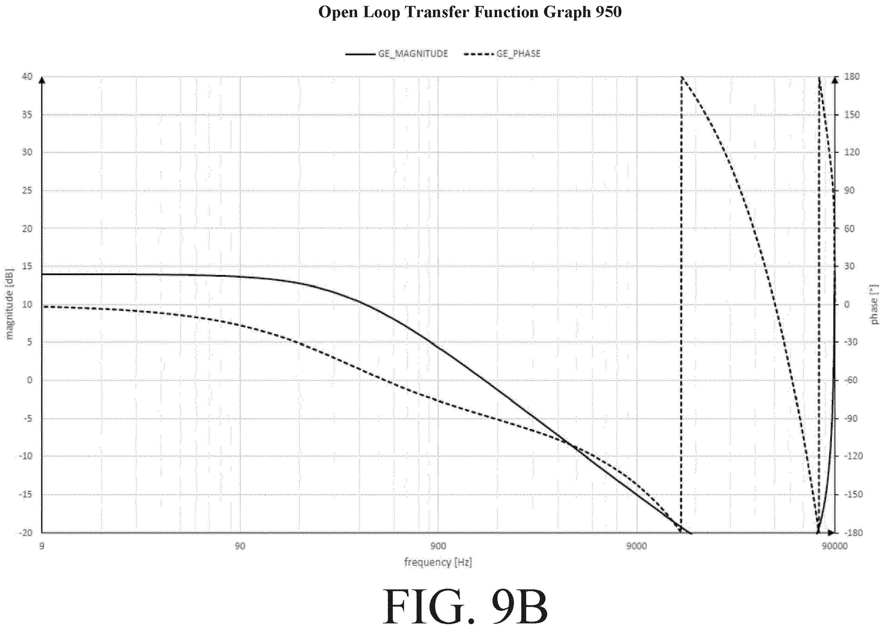

Partial saturation - Voltage loop. As can be seen from FIG. 7, there is a high-gain path **750** and a low-gain path **752** being additively combined in order to derive the GE's output value **748**. With reference to graph **950** of FIG. 9B, it becomes obvious that the overall loop is conditionally stable as the phase response drops below -180° where the magnitude response is above unity gain. The phase then recovers around the ULGF to values well above -180°. So under normal conditions this loop will be stable - but it might tend to oscillate under abnormal conditions (e.g., recovery from dynamic events).

One way to address this issue is partial saturation. This is done by feeding the output **746** of the high gain path through a threshold comparator **790** that: (i) causes the integrators of the high gain path to be halted; and (ii) replaces the output of the high gain path to the threshold value (e.g. +-20 V). The threshold comparator resides between combiners **724** and **726**. Statement (i) may mean in digital term that new integral values are calculated according to the input value each cycle but eventually replaced by another value if the path is halted. This another value might be the last integral value stored before the path entered halted operation. The results of the comparison operation performed by threshold comparator **790** is provided to integrators **710, 716** and **722** for use in controlling operations thereof.

In some scenarios, the output of the high gain path may be limited to +-20 V. When the high-gain path is halted, the high gain path output does not contribute to the frequency response of the overall structure as it just outputs a fixed value. This action effectively reduces the order of the loop (by a number of three in this example as one complex-conjugate pole pair and one real pole are taken out of the equation). Graph **950** of FIG. 9B shows the transfer function of the loop with halted high gain path. It can be seen easily that the loop gain was reduced significantly but the loop is unconditionally stable. For example, at 0 dB gain, there is approximately -90° phase shift and phase does not drop below -180° at gains above unity.

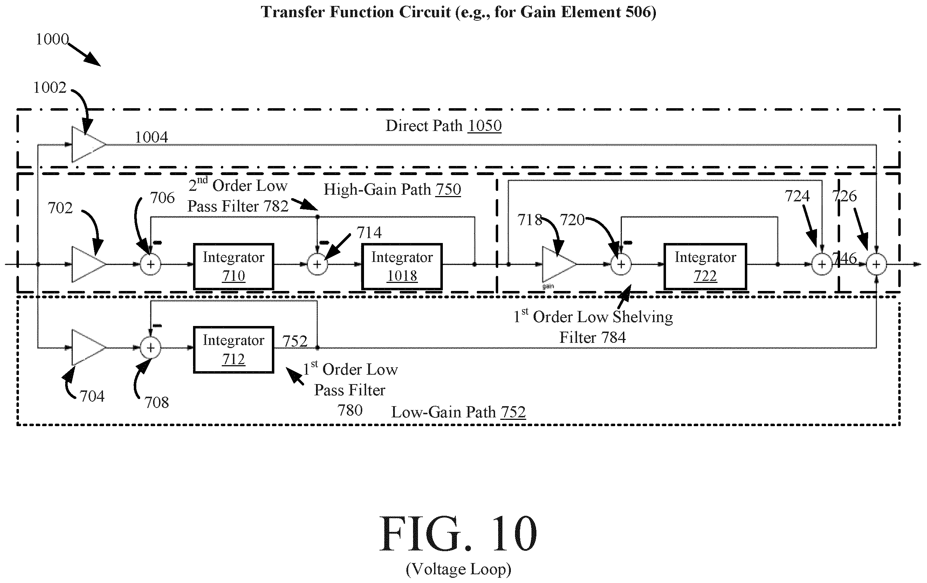

FIG. 10 provides a circuit diagram of an illustrative architecture for another transfer function circuit **1000** of a GE (e.g., GE **506** of FIG. 5). Transfer function circuit **1000** is similar to transfer function circuit **700** but has some differences. One difference is that integrator **712** has a different value selected for parameter $k_i$. For example, in some scenarios, the value of $k_i$ for integrator **712** in transfer function circuit **1000** is selected to be one thousand five hundred thirty eight rather than two thousand. The present solution is not limited to the particulars of this example. Another difference is that transfer function circuit **1000** comprises an additional direct path **1050** from its input to its output. The direct path **1050** includes an amplifier **1002** to facilitate limiting the attenuation of higher frequencies. Amplifier can have a gain value selected in accordance with an application. For example, the gain value for amplifier **1002** is selected to be 0.25. The present solution is not limited in this regard.

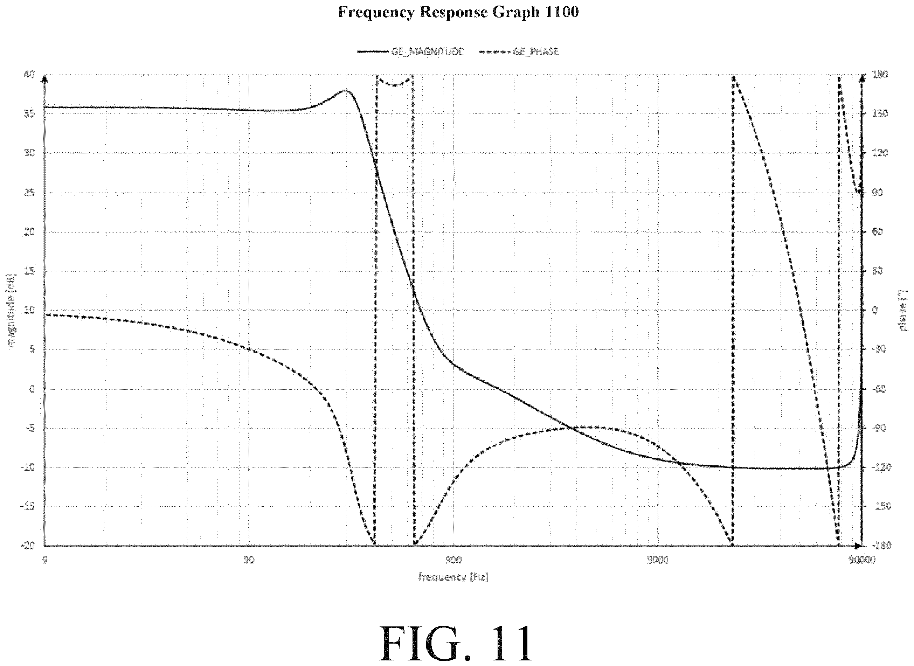

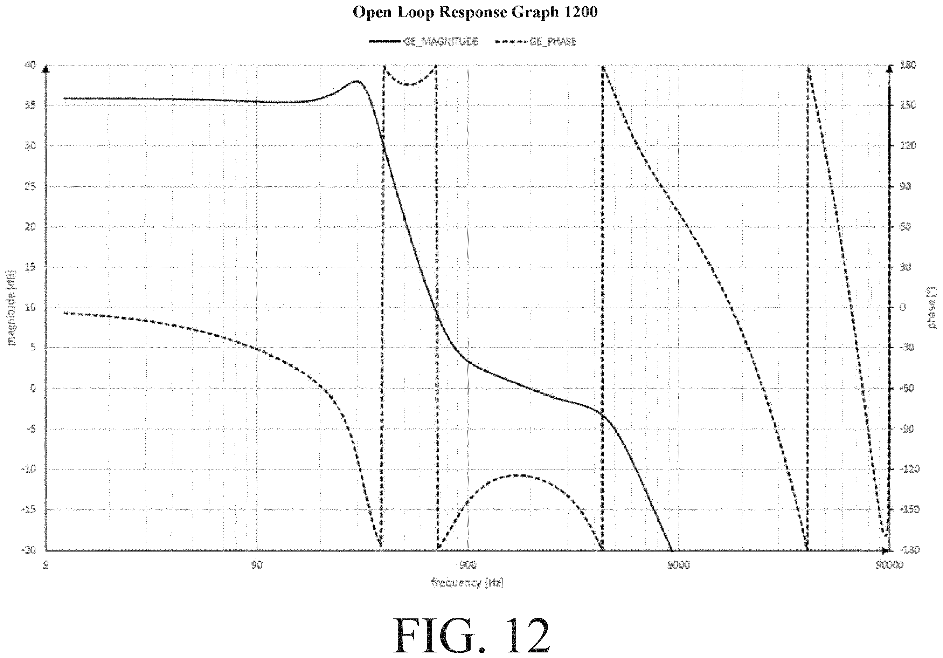

As shown in FIG. 10, the output voltage signal **1004** of the first path **1050** is added to the output voltage signals **756, 746** of the high- and low-gain paths **750, 752** (e.g., integrators **712, 722**) to produce the output signal of the transfer function circuit **1009**. The frequency response of the transfer function circuit **1000** is shown by graph **1100** of FIG. 11. Graph **1200** of FIG. 12 illustrates the response shown in FIG. 6 multiplied (in the frequency domain) with response shown in FIG. 11 given the open loop response of circuit **500** with **1000** inside **506.**

Current Loop

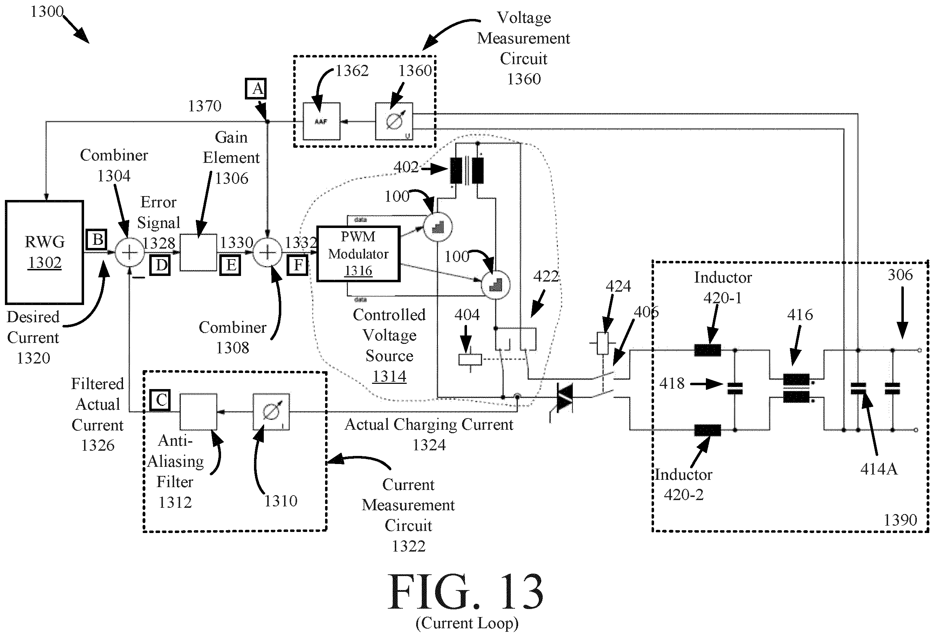

FIG. 13 provides an illustration of a current control loop (CCL) **1300**. Similar to the HOVCL **500,** pursuant to another non-limiting aspect of the present teachings, the CCL **1300** is provided to compensate for non-ideal effects (e.g., the effects of parasitic resistance) in the system. Moreover, the CCL **1300** can ensure that two or more energy storage modules **100** may operate in parallel with respect to their input when an incoming AC current exists. In some scenarios, the incoming AC signal may not be sinusoidal. This issue is addressed by having a relatively large gain in the CCL **1300** to ensure that an actual current waveform is not defined by the incoming AC voltage waveform. The CCL **1300** can ensure, e.g., that the actual charging current **1324** remains unaffected, or relatively unaffected, by the incoming voltage waveform.

CCL **1300** is configured to govern an instantaneous charging current from the inverter. The inverter receives a command voltage as an input value and determines a correct duty cycle for the switching stages based on energy storage module data. The energy storage module data can include, but is not limited to, battery data. A voltage difference between voltage present at the AC input **306** and the voltage output from the controlled voltage source (CVS) **1314** is converted into a current by inductors **420-1, 420-2** and parasitic resistance.

The task of CCL **1300** is to adjust the voltage difference in a way that the actual current **1324** matches a desired current or reference waveform signal **1320** as close as possible (at relevant frequencies). To do so, the difference between desired current **1320** and actual current **1324** is considered an error signal **1328**. Error signal **1328** is passed to a gain element (GE) **1306** where its spectral energy is shaped.

During operation, a current measurement circuit **1322** acquires an actual charging current **1324** and applies anti-aliasing filtering (AAF) thereto in block **1312** to generate a filtered actual current **1326**. A voltage sensor **1310** may be provided for measuring voltage. The output current **1326** of anti-aliasing filter (AAF) **1312** is passed to combiner **1304**.

A reference waveform generator (RWG) **1302** generates a desired current waveform **1320**. It should be noted that the voltage measurement circuit **1360** is connected to RWG **1302**. RWG **1302** synchronizes its waveform generation process to the voltage waveform **1370** seen at the AC input **306,** for example, by using a phase lock loop (PLL) circuit. The desired current **1320** is passed to combiner **1304**.

Combiner **1304** subtracts a filtered actual current **1326** from the desired current **1320** to obtain the error signal **1328**. Error signal **1328** is passed to GE **1306** where its spectral energy is shaped. GE **1306** performs operations to apply a filtering function to the error signal **1328** to generate a correction signal **1330**. The filter function may amplify low-frequency portions of the error signal and attenuate high-frequency portions of the error signal. It should be noted that the control loop is preferably conditionally stable which means that it will not oscillate under normal conditions. However, when overdriven, the control loop may oscillate randomly. In this regard, the GE **1306** amplifies the error signal **528** for low frequency in a way that for the overall loop there is a frequency at which the open loop gain is unity (ULGF) and magnitude (e.g., absolute value) of phase shift is less (e.g., significantly less) than -180°.

The correction signal **1330** is added by combiner **1308** to signal **1370**. These operations may stabilize the voltage signal. The corrected input signal **1332** is passed to an input of the PWM modulator **1316** of the CVS **1314**. The PWM modulator **1316** is configured to consume a command voltage and battery data in order to determine the right PWM drives signals (duty cycle) for the energy storage module in **100**. The energy storage module **100** produces a voltage that is a product of the actual battery voltage and the actual PWM duty cycle.

CCL **1300** is configured to measure the charging current. In this regard, the CCL **1300** is configured to operate in the digital domain. The sampling frequency $f_s$ of CCL **1300** can be selected in accordance with any application. For example, the sampling frequency $f_s$ is selected as 90 kHz. The present solution is not limited to the particulars of this example. The signal is band-limited prior to sampling in order to meet the Nyquist criterion (AAF-aspect). Analog filter of third order may be used to amplify and filter the voltage drop across a corresponding shunt resistor.

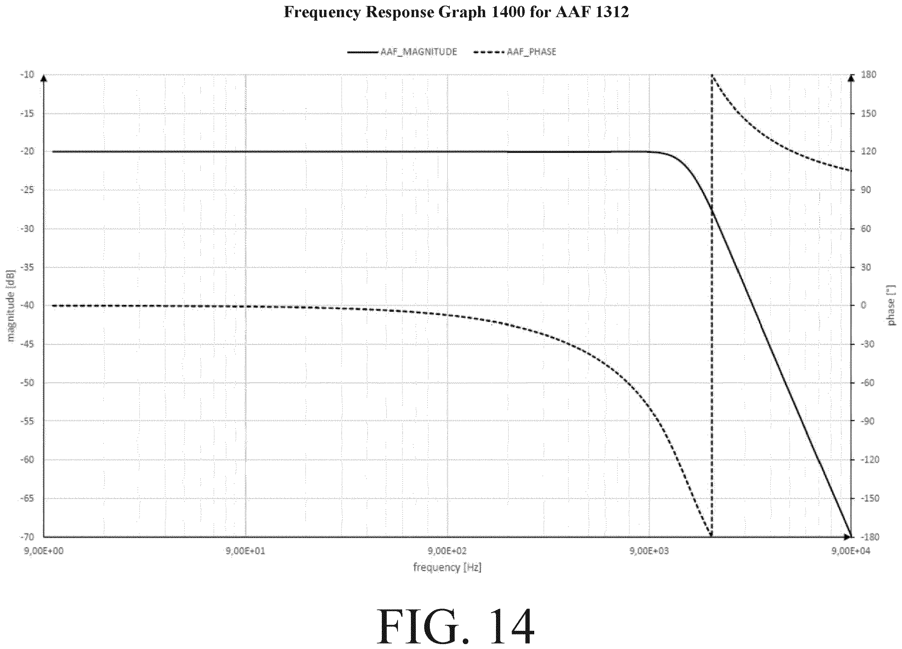

The AAF(s) **1312** of the CCL **1300** may be tuned so that the filter response meets the following requirements: 32dB damping at the Nyquist frequency of 45 kHz; max. overshoot < 20 mdB; phase error at 60 Hz < 0.5°; and gain such that 1 digit (of a 12-bit ADC) equals 8.05 mA. An (idealized) frequency response of such filter is shown by graph **1400** of FIG. 14.

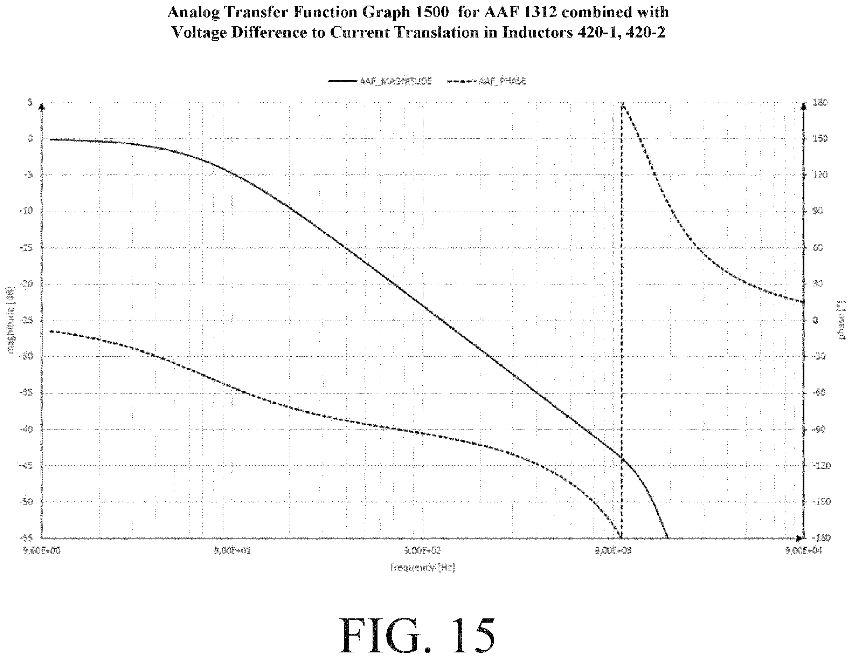

Another component that contributes to the transfer function of the CCL **1300** is the inductor. Its transfer function might be modeled with an inductance of 248 μH and a parasitic series resistance of 100 mΩ. These values are chosen in accordance with the actual components used as inductors **420-1** and **420-2.** Graph **1500** of FIG. 15 shows the response of the inductor to a difference of 1V - multiplied with the AAF response from FIG. 14. This scaling step is important for further analysis as the CVS input is also assumed to be scaled in 1 V.

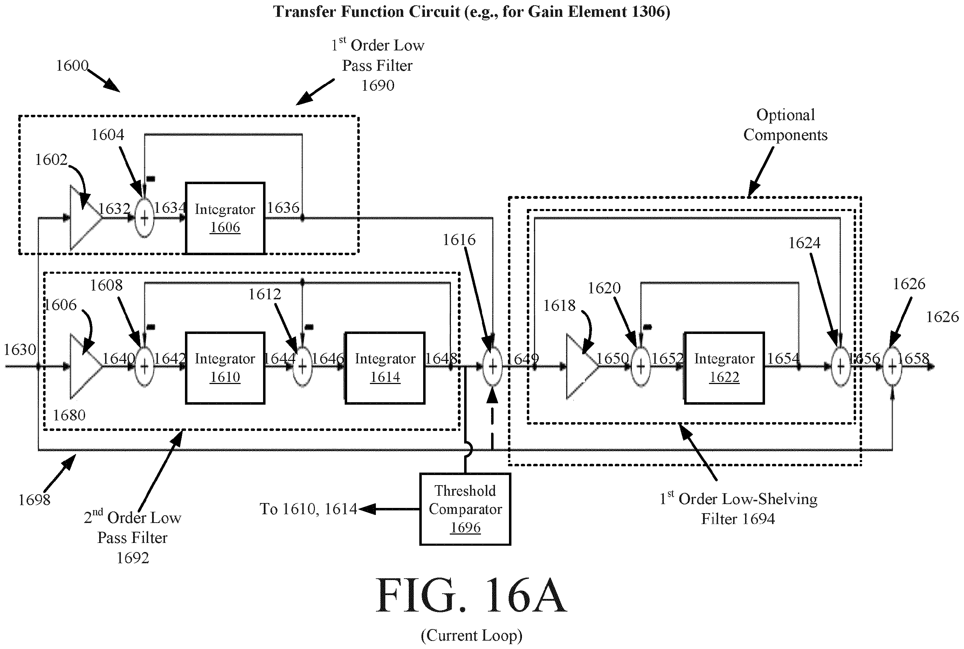

In order to maximize computational efficiency, the transfer function of GE **1306** may comprise a linear combination of digital integrators. FIG. 16A provides a circuit diagram for a transfer function circuit **1600** of a GE (e.g., GE **1306** of FIG. 13). It should be noted that components **1618-1626** are optional components. In the case that these optional components are not provided in the circuit, line **1698** is connected to component **1616** instead of component **1626**. Line **1698** can be referred to as a unit gain response connection to provide a gain of a certain value (e.g., 1) between an input and output of the transfer function circuit **1600**. In a non-limiting embodiment, the feature **1698** may be a direct connection between the input and output of the transfer function circuit **1600**. Thus, more generally, the unit gain feature **1698,** via which the error signal **1328** is combined to obtain the third filtered signal **1649** or the output signal **1658,** may or may not be a gain of one.

Transfer function circuit **1600** comprises a plurality of low pass filters **1690, 1692,** and a first order low-shelving filter **1694.** Each of the listed filters may be referred to as a gain component. Filter **1690** comprises a first order low pass filter with operations defined by mathematical equations (4)-(6). First order low pass filter **1690** comprises a combiner **1604** and integrator **1606.** The first order low-shelving filter **1694** adds a band limited amplification to the low-pass filter paths **(1690, 1992)** (e.g., to apply a gain of one). In this regard, the first order low-shelving filter **1694** provides unity response (e.g., neither amplification nor attenuation) for high frequency components, amplification for low frequency components, and first order roll-off (e.g., -20 dB/decade) for intermediary frequency components. Operations of the first order low-shelving filter **1694** are defined by mathematical equation (17).

$$H(z) = G \cdot ((k_i/f_s)/((k_i/f_s) + 1 - z^{-1})) + 1 \qquad (17)$$

*G* represents the amplification value of amplifier **1618.** First order low-shelving filter **1694** comprises an amplifier **1618,** a combiner **1620, 1624** and integrator **1622.** Components **1620** and **1622** perform low pass filtering on the signal output from amplifier **1618.** Low pass filter **1692** comprises a second order low pass filter **1692** with operations defined by mathematical equations (8)-(16). Second order low pass filter **1692** comprises combiners **1608, 1612** and integrators **1610, 1614.**

During operation, an input signal (e.g., error signal **1328** of FIG. 13) is passed to amplifiers **1602** and **1606.** Both amplifiers **1602, 1606** perform operations to multiply the input voltage signal by a gain value. For example, in some scenarios, the gain value of amplifier **1602** is selected to be two and the gain value of amplifier **704** is selected to be forty. The present solution is not limited to the particulars of this example.

With regard to the first order low pass filter **1690,** low pass filtering of the amplified voltage signal **1632** is performed. In this regard, the amplified voltage signal **1632** is input to combiner **1604.** The combiner **1604** subtracts an output voltage signal **1636** of integrator **1606** from the amplified voltage signal **1632** to obtain a combined voltage signal **1634.** Voltage signal **1634** is passed to integrator **1606.** The integrator **1606** performs operations defined by mathematical equations (1) to obtain an integral of the voltage signal **1634** over a frequency range based on the circuit time constant. Integrator **1606** has a value for parameter $k_i$ that is selected in accordance with an application. For example, in some scenarios the value of $k_i$ for integrator **712** is selected to be one thousand five hundred. The present solution is not limited to the particulars of this example. The voltage signal **1636** is passed to combiner **1616** which follows the second order low pass filter **1692.**

With regard to the second order low pass filter **1692,** low pass filtering to amplified voltage signal **1632** is performed. In this regard, the amplified voltage signal **1632** is input to combiner **1608.** Combiner **1608** subtracts a feedback signal **1648** from the voltage signal **1632** to obtain combined signal **1642.** Combined signal **1642** is passed to an input of integrator **1610.** Integrator **1610** performs operations defined by mathematical equation (1) to obtain an integral of the voltage signal **1642** over a frequency range based on the circuit time constant. Integrator **1610** has a value for parameter $k_{i,A}$ that is selected in accordance with an application. For example, in some scenarios, the value of $k_{i,A}$ for integrator **1610** is selected to be one thousand. The present solution is not limited to the particulars of this example. The output voltage signal **1644** of integrator **1610** is passed to a next combiner **1612** of the second order low pass filter **1692.** Combiner **1612** subtracts the feedback signal **1648** from voltage signal **1644** of integrator **1610** to obtain a combined voltage signal **1646.** Combined voltage signal **1646** is passed to integrator **1614.** Integrator **1614** performs operations defined by mathematical equation (1) to obtain an integral of the combined voltage signal **1646** over a frequency range based on the circuit time constant. Integrator **1614** has a value for parameter $k_{i,B}$ that is selected in accordance with an application. For example, in some scenarios, the value of $k_{i,B}$ for integrator **710** is selected to be two hundred. The present solution is not limited to the particulars of this example. The output voltage signal **1648** of integrator **1614** is not only fed back to combiners **1608** and **1612,** but is also passed forward to combiner **1616.** Combiner **1616** combines signals **1636** and **1648** to produce combined signal **1649.** Signal **1649** is passed forwards to amplifier **1618** and combiner **1624** of the first order low-shelving filter **1694.**

Amplifier **1618** performs operations to multiply the incoming waveform by a gain value. The gain value can be selected in accordance with an application. For example, the gain value is selected to be ten. The present solution is not limited to the particular of this example. As noted above, first order low-shelving filter **1694** performs low pass filtering with a transfer function. In this regard, voltage signal **1650** is passed to combiner **1620.** Combiner **1620** subtracts an output voltage signal **1654** of integrator **1622** from the output voltage signal **1650** of amplifier **1618** to obtain combined voltage signal **1652.** Voltage signal **1652** is passed to an input of integrator **1622.** Integrator **1622** performs operations defined by mathematical equation (1) to obtain an integral of the combined voltage signal **1654** over a frequency range based on the circuit time constant. Integrator **1622** has a value for parameter $k_i$ that is selected in accordance with an application. For example, in some scenarios, the value of $k_i$ for integrator **710** is selected to be one hundred. The present solution is not limited to the particulars of this example. The output voltage signal **1654** of integrator **1622** is not only fed back to combiner **1620,** but is also passed forward to an input combiner **1624.**

Combiner **1624** adds the voltage signal **1649** to the output voltage signal **1654** of the integrator **1622.** The output signal **1656** of the combiner **1624** is passed to an input of a next combiner **1626**. Combiner **1626** adds the signal **1630** to signal **1656** to generate an output signal of the transfer function circuit **1600**. Error signal **1630** can include, but is not limited to, error signal **1328** of FIG. 13.

The transfer function circuit **1600** may also optionally comprise a threshold comparator **1696** connected to the output of integrator **1614**. The threshold comparator **1696** is configured to compare the signal **1648** to a threshold value. A result of this comparison operation is provided to integrators **1610** and **1614** for use in controlling operations thereof.

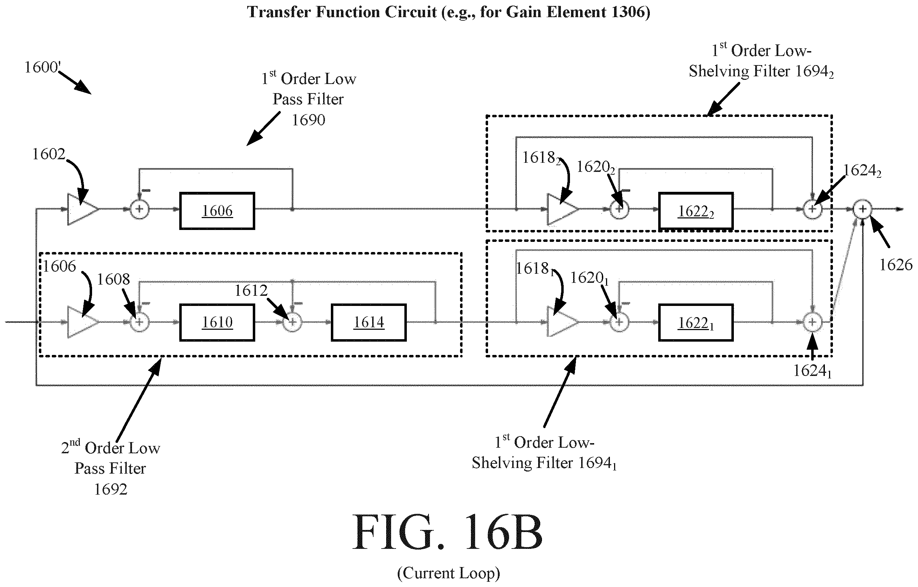

The present solution is not limited to the transfer function architecture shown in FIG. 16A. Another illustrative transfer function architecture is shown in FIG. 16B. Common circuit components are referenced in FIGS. 16A and 16B using the same reference numbers. The difference between circuit **1600** and **1600'** is that circuit **1600'** has two optional first order low-shelving filters **1694₁**, **1694₂**. Each set of components **1618₁, 1620₁, 1622₁, 1624₁** and **1618₁₂, 1620₂, 1622₂, 1624₂** may be referred to as a first order low-shelving filter. The circuit of FIG. 16A has a common first order low-shelving filter **1694** for both the top and bottom signal paths, which provides improved computational costs, complexity and processing power. This simplification is possible if first order low-shelving filter **1694₁** exactly equals first order low-shelving filter **1694₂**.

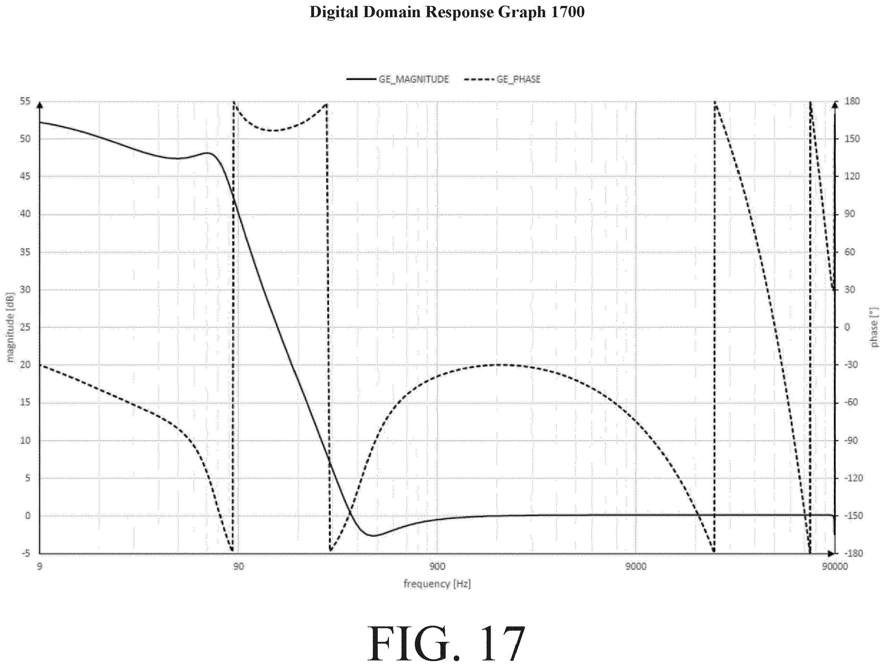

By further taking into account two 1/90 kHz unit delays which result from analog-to-digital conversion (ADC), direct memory access (DMA) and PWM operation, a response of the digital domain parts as shown in graph **1700** of FIG. 17 is obtained.

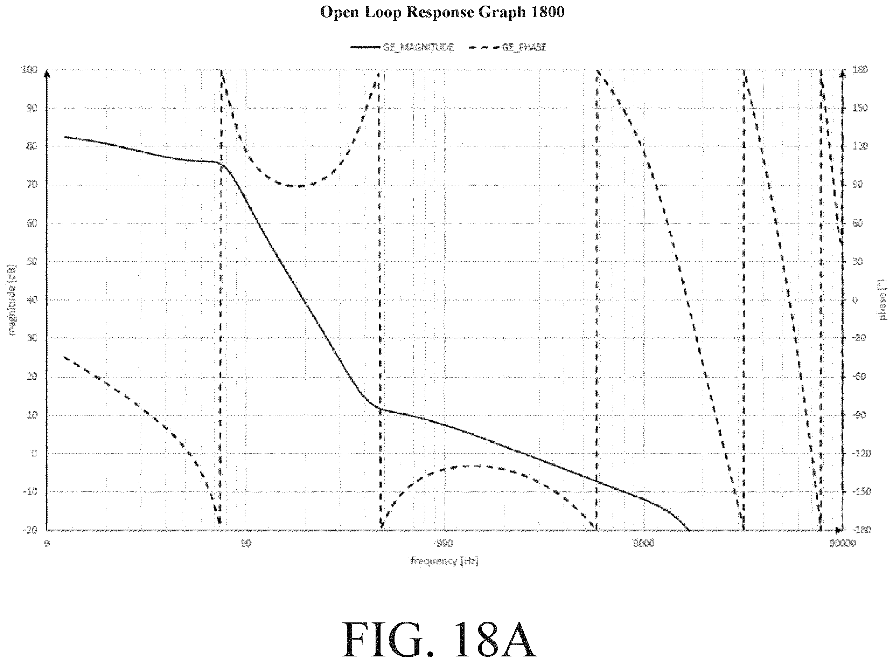

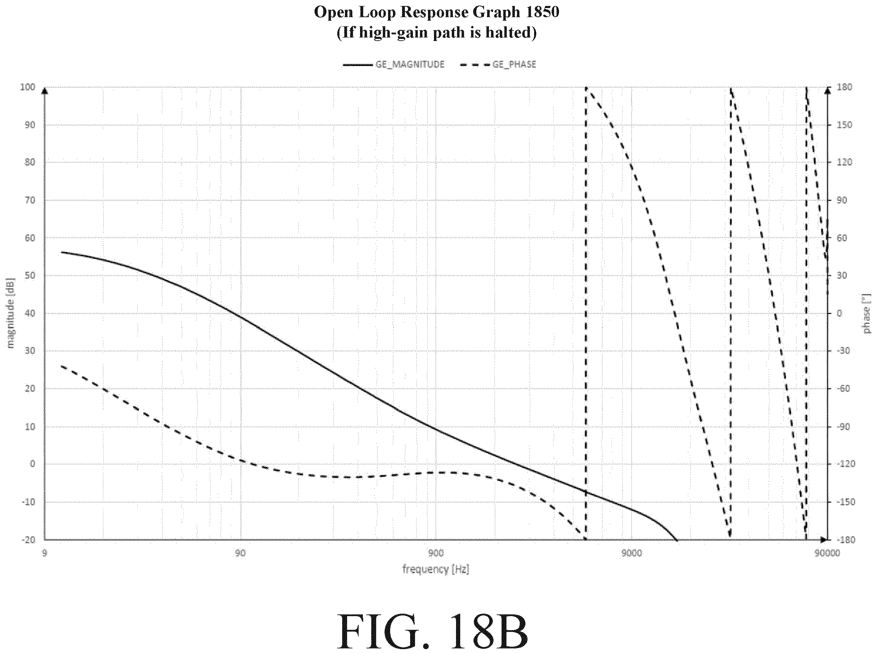

These two transfer functions of FIGS. 15 and FIG. 17 may be multiplied to obtain the overall open loop response shown by graph **1800** of FIG. 18A - from which it is possible to conclude whether the closed loop will be stable or not. The depicted transfer function further includes a multiplicative scaling factor (gain) that is present in the device due to current-to-voltage unit conversion. As can be seen in FIG. 18, ULGF is around 2 kHz. A phase margin is around 55°. A gain margin is around 10 dB.

In some scenarios, part **1608** of transfer function circuit **1600** may be halted. The remaining open loop transfer function can be seen in graph **1850** of FIG. 18B.

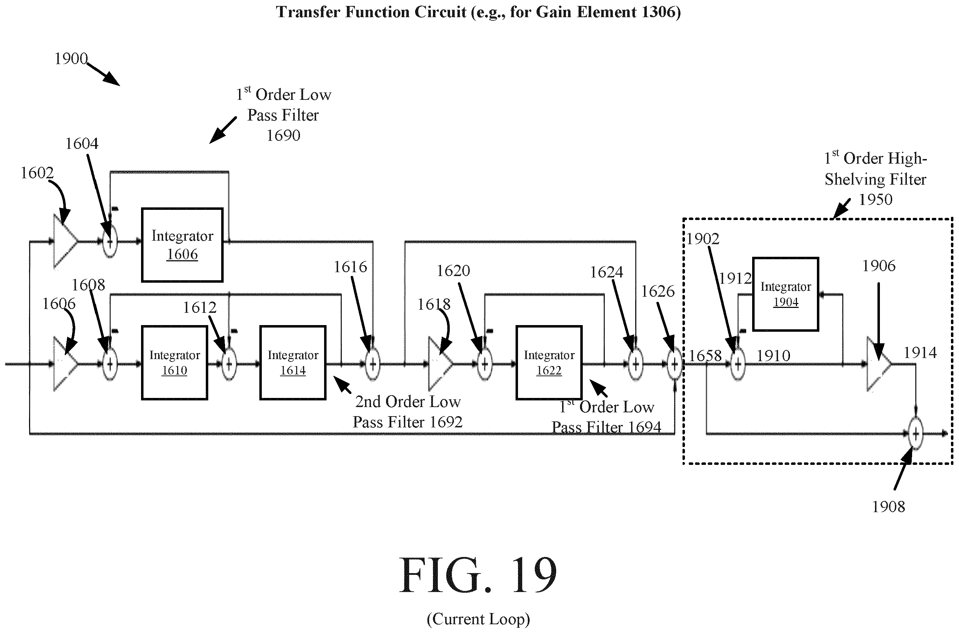

FIG. 19 provides a circuit diagram of another transfer function circuit **1900** for a GE (e.g., GE **1306** of FIG. 13). Transfer function circuit **1900** comprises a linear combination of integrators. Transfer function circuit **1900** was generated by combining the circuit of FIG. 16A with a first order high-pass filter **1902, 1904** and a gain element **1906**. The gain element **1906** may alternatively reside prior to combiner **1902** in other scenarios. The direct path around the first order high-pass filter and combiner **1908** gives a first order high-shelving filter **1950**. The first order high-shelving filter **1950** comprises a first order high-pass filter **1902, 1904,** gain element **1906** and direct path plus combiner **1908**. First order high-shelving filter **1950** is configured to perform high pass filtering with a transfer function. In this regard, first order high-shelving filter **1950** comprises combiner **1902** and integrator **1904** to implement the high pass filtering. High pass filtering operations can be defined by mathematical equations (18)-(19).

$$H = Y/X = 1/(1 + A) \tag{18}$$

$$A = A(z) = (k_i/f_s)(1/(1 - z^{-1})) \tag{19}$$

Setting mathematical equation (19) into mathematical equation (18) provides mathematical equation (20).

$$H(z) = 1 \ / \ ((k_i/f_s) \cdot (1/(1 - z^{-1})) + 1) \tag{20}$$

The high pass filter may be modified to provide a high-shelving filter as defined by mathematical equation (21).

$$H(z) = (G \ / \ ((k_i/f_s) \cdot (1/(1 - z^{-1})) + 1)) + 1 \tag{21}$$

**G** represents the amplification value of amplifier **1906**. In sum, the first order high-shelving filter **1950** provides unity response (e.g., neither amplification nor attenuation) for low frequency components, a slope of +20 db/decade for intermediary frequency components, and amplification of high frequency components.

During operations, the output signal **1658** of combiner **1626** is passed forward to the first order high-shelving filter **1950**. The first order high-shelving filter **1950** high pass filters signal **1658** with a transfer function. In this regard, signal **1650** is combined by combiner **1902** with the output signal **1912** of integrator **1904**. The resulting signal **1910** is passed to the input of integrator **1904** and an input of an amplifier **1906**. Amplifier **1906** has a gain value selected in accordance with an application. For example, the gain value for amplifier **1906** is selected to be two. The present solution is not limited in this regard. The output signal **1914** of amplifier **1906** is combined with signal **1658** by combiner **1908** to produce the output signal of the transfer function circuit **1900**.

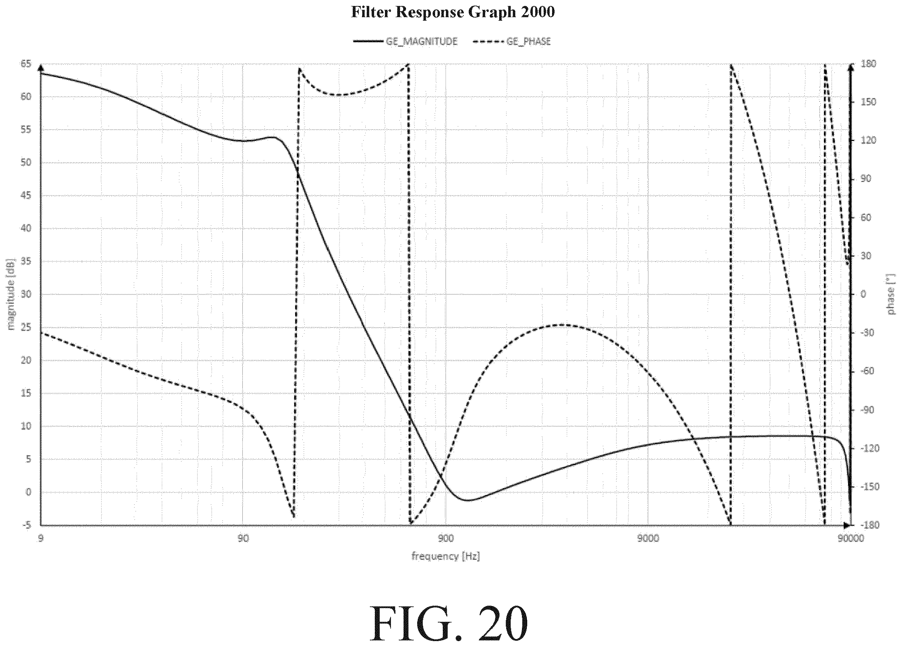

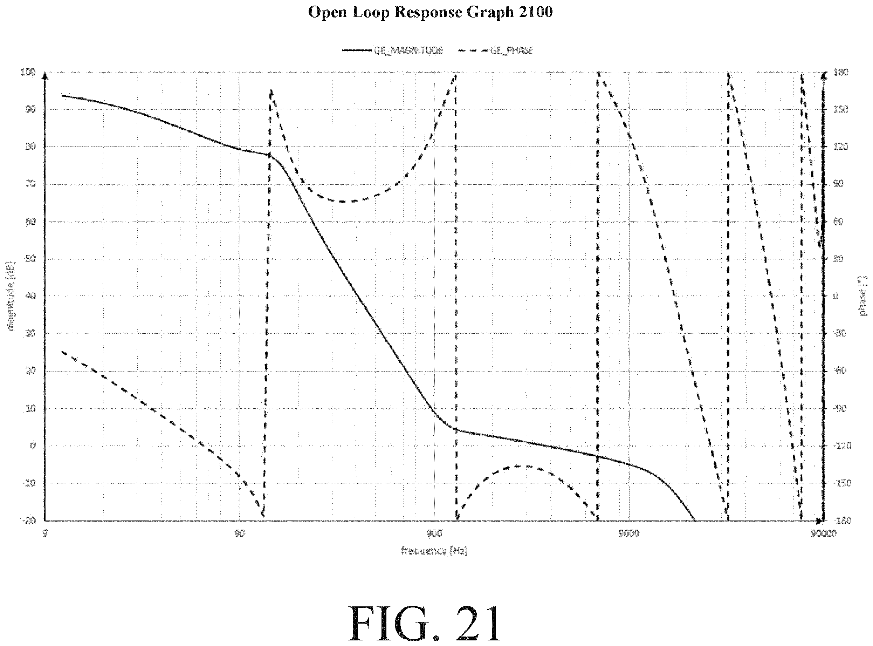

The filter response of the transfer function circuit **1900** is shown by graph **2000** of FIG. 20, while graph **2100** of FIG. 21 shows the combined open loop response of the overall loop **1300** with the transfer function circuit **1900** in **1306**. Graph **2100** shows an improved loop gain below 1 kHz (while keeping phase margin and shifting ULGF to approx. 3 kHz ) (compared to the response shown in FIG. 18A).

Model based control - Voltage loop. As already discussed in relation to FIG. 5, the response of CVS **514** comprises (i) components or features that are unknown (e.g., hard to calculate and/or predict) and (ii) components or features that are well known (e.g., well predictable). Components/features (i) may be mitigated by the control loop. The components/features (i) may include, but are not limited to, a voltage drop over parasitic resistance. Components/features (ii) can include, but are not limited to, the 1/90 kHz unit delay caused by the operation of the PWM algorithm that consumes the command voltage and pre-calculates module order and duty cycle in the current 1/90 kHz cycle in order to apply the actual waveforms in the subsequent cycle.

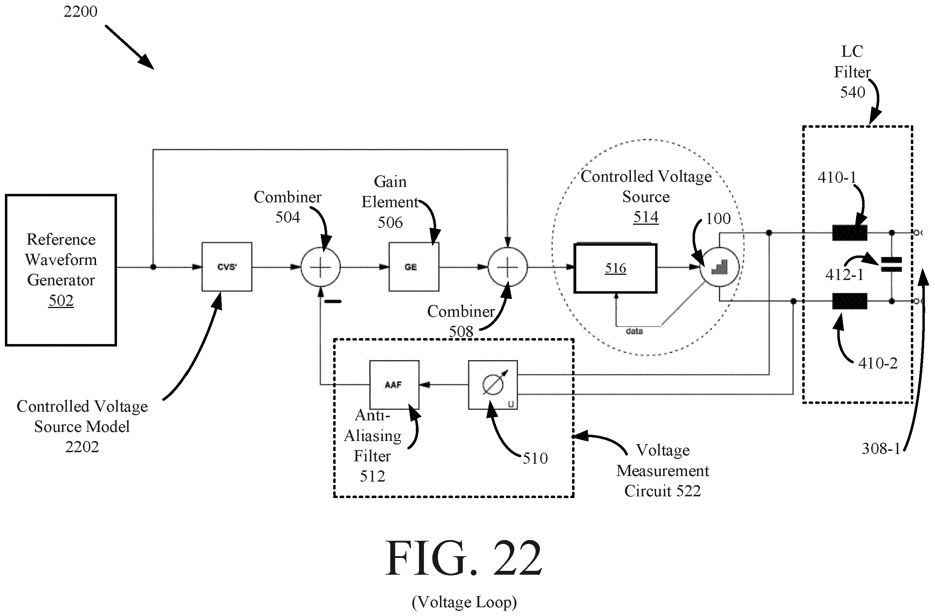

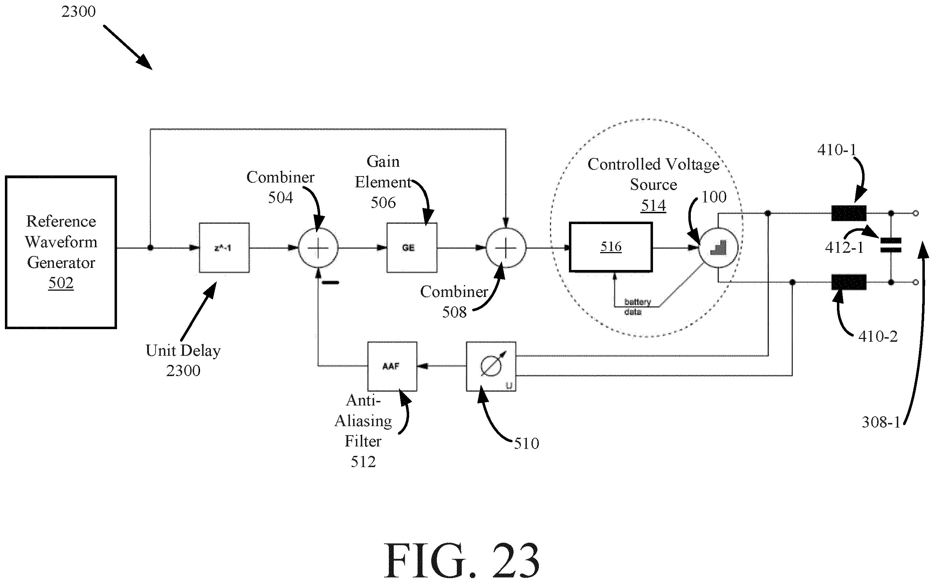

In order to mitigate components/features (ii) the circuit may be modified by adding a controlled voltage source model **2202** between the RWG **502** and combiner **504** as shown in FIG. 22. The controlled voltage source model **502** comprises a model of the invariant parts (ii). One possible function of the controlled voltage source model **502** may be a unit delay **2300** as shown in FIG. 23. The unit delay **2300** may be configured to delay the signal by one sample. The present solution is not limited in this regard. The controlled voltage source model **2202** pre-distorts or pre-filters the input to combiner **504** in a way that is very close to the way CVS **514** reacts to an input signal (under no-load condition). Like this, the error term is minimized which helps to keep the GE far from entering halted operation.

Model based control - Current loop. An estimate of the amount of voltage difference to go from a first sample of desired current to the subsequent sample may be obtained by assuming a proper value for inductance and resistance in the circuit. For example, in one scenario, an assumption is made that inductance is 248 $\mu$H and a resistance is 100 m$\Omega$. The voltage difference $\Delta u$ to go from one current value $i[k]$ to $i[k+1]$ may be calculated using the following mathematical equation (22):

$$\Delta u = \left( \frac{L}{\Delta t} + R \right) \cdot (i[k+1] - i[k]) = ((248\mu H \cdot 90 kHz) + 100 m\Omega) \cdot (i[k+1] - i[k]) = 22.42 \frac{V}{A}(i[k+1] - i[k]). \quad (22)$$

It shall be appreciated that the values (e.g., component values and/or frequency value) shown in herein used examples (e.g., above equation) are non-limiting to the scope and generality of the present teachings.

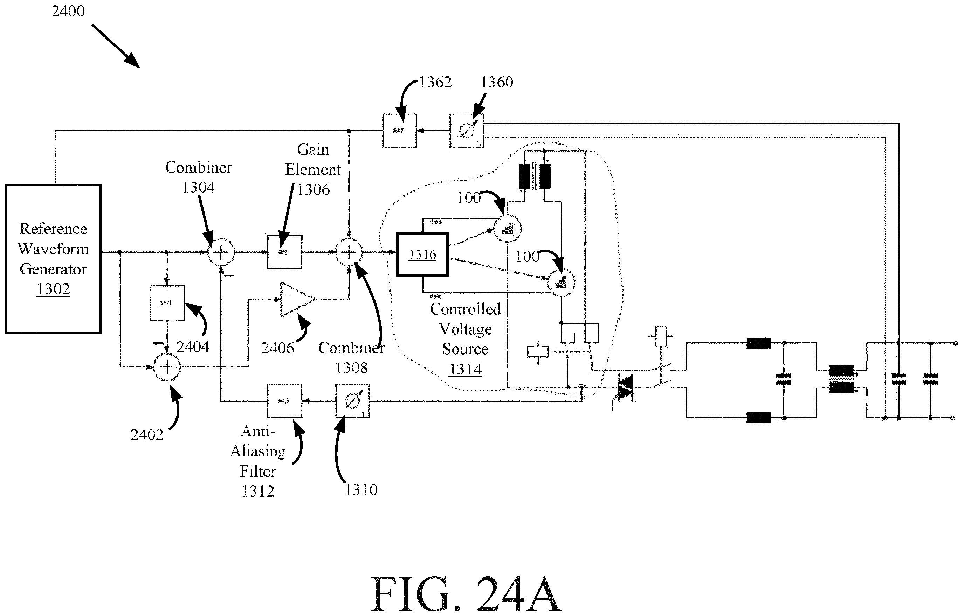

FIG. 24A provides an illustration of a circuit **2402, 2404, 2406** configured to compute $\Delta u$ based on two subsequent values of desired current. This difference ($\Delta u$) is input to combiner **1308** thereby contributed additively to the signal provided to PWM modulator **1316**.

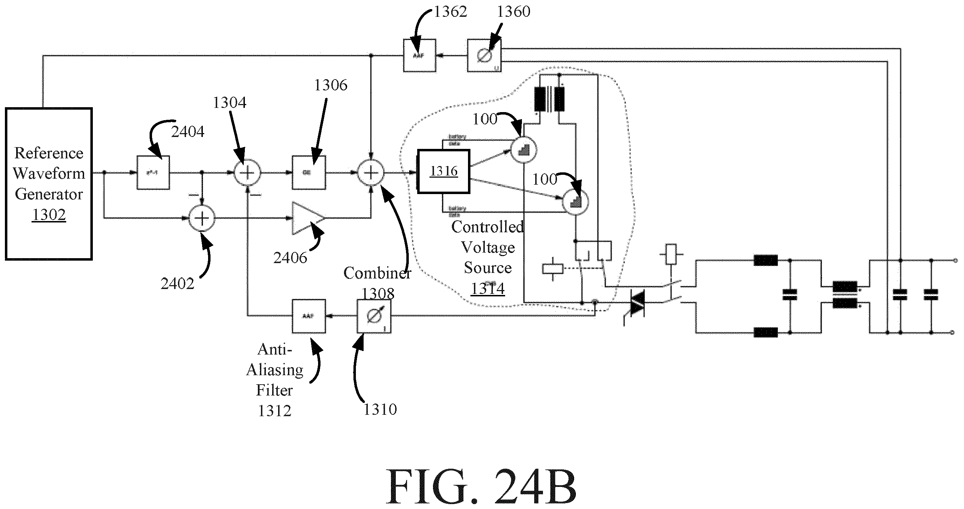

FIG. 24B provides an illustration of a circuit that further takes the input to combiner **1304** from the output of unit delay **2404** which was introduced to calculate ($i[k+1]$ - $i[k]$) with FIG. 24A. Again, there is a unit delay **2406** inside CVS which causes the voltage across the inductors **410-1, 410-2** applied during one 1/90 kHz PWM cycle being correspondent to the desired current calculated one cycle before. This might be taken into account by pre-filtering the input to the control loop as showed for the voltage loop already. Like this, the error term is minimized which helps to keep the GE far from entering halted operation.

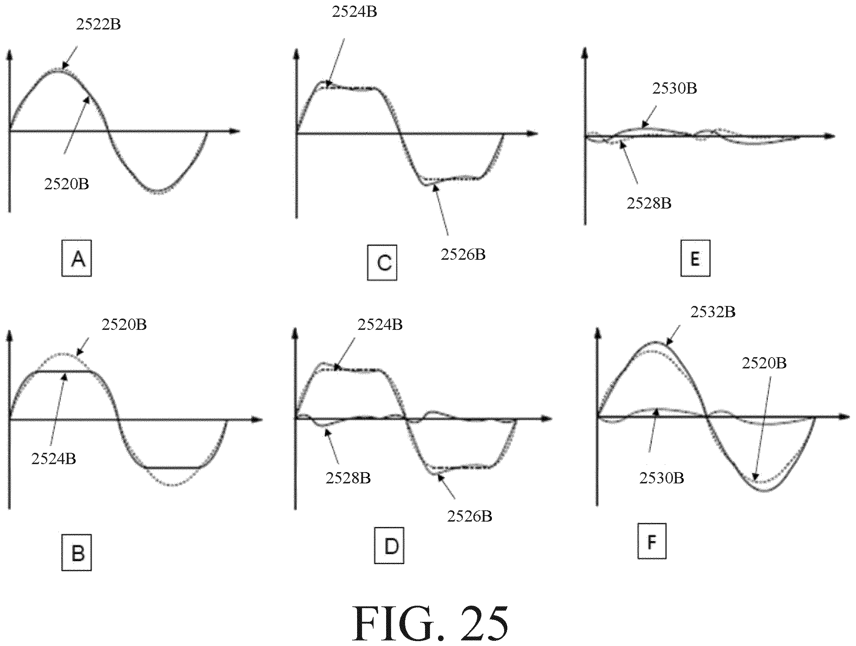

FIG. 25 provides graphs showing illustrative waveforms at different points in the current loop **1300**. In FIGS. 25A and 25B, in the plot taken at node A of electrical system 1300, waveform **2520B** may be a voltage waveform that is produced based on a voltage measured by voltage measurement circuit **1360** at input port circuit **1390** (e.g., a voltage across capacitor **414A)**. Waveform **2522B** is a pure sine wave shown in dotted line for comparison. As further shown in FIGS. 25A and 25B, in the plot taken at position **B** of electrical system **1300,** reference waveform **2524B** may be provided as an output of waveform generator **1302**. Reference waveform **2524B** may act as a reference waveform that is in phase with waveform **2520B** shown in dotted line for comparison. Reference waveform **2524B** may act as a reference waveform to provide a guide as to how a charging current for charging ESMs should ideally look.

As further shown in FIGS. 25A and 25B, in the plot taken at position **C** of electrical system **1300,** waveform **2526B** is a waveform of the actual charging current applied to ESMs. Reference waveform **2524B** is shown in dotted line for comparison. As further shown in FIGS. 25A and 25B, in the plot taken at position **D** of electrical system **1300,** waveform **2528B** is a waveform of an error signal that is based on a deviation between waveform **2526B** (shown in dotted line) and waveform **2524B** (shown in dotted line).

As further shown in FIGS. 25A and 25B, in the plot taken at position **E** of electrical system **1300,** waveform **2530B** is a waveform of the output of gain element **1306**. In some non-limiting embodiments, the output of gain element **1306** may be based on a transfer function (as a non-limiting example, convolution operation) of waveform **2528B** (shown in dotted line) and an impulse response of gain element **1306**. As further shown in FIGS. 25A and 25B, in the plot taken at position **F** of electrical system **1300,** waveform **2532B** is a waveform of a desired output voltage at an inverter circuit (e.g., inverter circuit **114** or power module **404)** of electrical system 1300. In some non-limiting embodiments, waveform **2532B** may be provided by adding waveform **2520B** and waveform **2530B.**

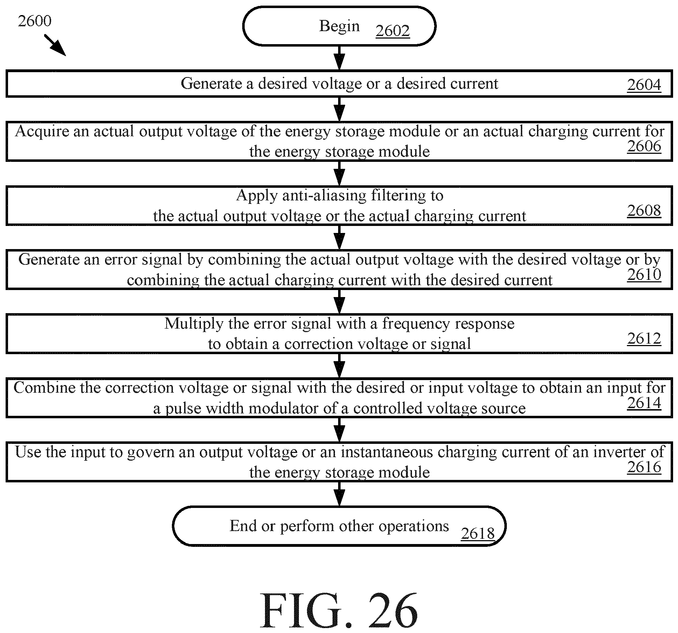

FIG. 26 provides a flow diagram of an illustrative method **2600** for operating a circuit (e.g., circuit **500** of FIG. 5, **700** of FIG. 7, **1000** of FIG. 10, **1300** of FIG. 13, **1600** of FIG. 16A, **1600'** of FIG. 16B, **1900** of FIG. 19, **2200** of FIG. 22, **2300** of FIG. 23, and/or **2400** of FIG. 24) with an energy storage module (e.g., energy storage module **100** of FIG. 1). Method **2600** begins with **2602** and continues with **2604** where a desired voltage (e.g., desired voltage **520** of FIG. 5) or a desired current (e.g., desired current **1320** of FIG. 13) is generated. In next block **2606,** an actual output voltage (e.g., actual output voltage **524** of FIG. 5) or an actual charging current (e.g., actual charging current **1324** of FIG. 13) for the energy storage module is acquired. Anti-aliasing filtering may be applied to the actual output voltage or the actual charging current in block **2608.**

An error signal (e.g., error signal **528** of FIG. 5 or **1328** of FIG. 13) is generated in block **2610.** The error signal may be generated by combining the actual output voltage with the desired voltage or by combining the actual charging current with the desired current. For example, the actual output voltage may be subtracted from the desired voltage or the actual charging current may be subtracted from the desired current. The error signal is multiplied with a frequency response in block **2612** to obtain a correction voltage or signal (e.g., correction voltage or signal **530** of FIG. 5 or **1330** of FIG. 13). The multiplication operation of block **2612** may be achieved using a linear combination of digital integrators implementing a transfer function from which the frequency response is derived.

In some scenarios, the multiplication operation of block **2612** involves: applying second order low pass filtering to the error signal to obtain a first filtered signal (e.g., signal **730** of FIG. 7); applying first order low pass filtering to the first filtered signal to obtain a second filtered signal (e.g., signal **744** of FIG. 7); combining the first filtered signal with the second filtered signal to obtain a third filtered signal (e.g., signal **746** of FIG. 7); applying first order low pass filtering to the error signal to obtain a fourth filtered signal (e.g., signal **752** of FIG. 7); and combing the error signal, the third filtered signal, and/or the fourth filtered signal. The error signal may be amplified using a first gain value prior to applying the second order low pass filtering thereto, and/or amplified using a lower second gain value prior to applying the first order low pass filtering thereto. The second filtered signal may be amplified prior to applying the first order low pass filtering thereto. In some scenarios, block **2612** may also comprise comparing the third filtered signal output from a high-gain path (e.g., high-gain path **750** of FIG. 7) with a threshold value, and providing a result of this comparing to integrators (e.g., integrators **710, 716** and **722** of FI. 7) of a second order low pass filter (e.g., filter **782** of FIG. 7) and a first order low-shelving filter (e.g., filter **784** of FIG. 7) of the high-gain path.

In those or other scenarios, the multiplication operations of block **2612** involve: applying first order low pass filtering to the error signal to obtain a first filtered signal (e.g., signal **1636** of FIG. 16A); applying a second order low pass filtering to the error signal to obtain a second filtered signal (e.g., signal **1648** of FIG. 16A); combining the first and second filtered signals to obtain a third filtered signal (e.g., signal **1649** of FIG. 16A); applying first order low pass filtering to the third filtered signal to obtain a fourth filtered signal (e.g., signal **1654** of FIG. 16A); combining the third and fourth filtered signals to obtain a fifth filtered signal (e.g., signal **1656** of FIG. 16A); combing the error signal with the fifth filtered signal to obtain a combined signal (e.g., signal **1658** of FIG. 16A); applying first order high pass filtering to the combined signal to obtain a sixth filtered signal (e.g., **1910** of FIG. 19); and/or combining the sixth filtered signal with the combined signal. The error signal may be amplified using a first gain value prior to applying the second order low pass filtering thereto, and/or amplified using a lower second gain value prior to applying the first order low pass filtering thereto. The third filtered signal may be amplified prior to applying the first order low pass filtering thereto. In some scenarios, block **2612** may also comprise comparing the second filtered signal with a threshold value, and providing a result of the comparing to integrators (e.g., integrators **1610** and **1614** of FIG. 16A) of a second order low pass filter (e.g., filter **1692** of FIG. 16A).

Referring back to FIG. 26, the correction voltage or signal (e.g., correction voltage or signal **530** of FIG. 5 or **1330** of FIG. 13) is combined (e.g., in block **508** of FIG. 5 or block **1308** of FIG. 13) with the desired voltage (e.g., desired voltage **520** of FIG. 5) or a measurement of the input voltage (e.g., signal **1370** of FIG. 13) in block **2614.** The operations of block **2614** produce an input (e.g., command voltage **532** of FIG. 5 or **1332** of FIG. 13) for a PWM modulator (e.g., PWM modulator **516** of FIG. 5 or **1316** of FIG. 13) of a CVS (e.g., CVS **514** of FIG. 5 or **1314** of FIG. 13).

In **2616,** the input is used to govern an output voltage or an instantaneous charging current of an inverter (e.g., transistor active bridge circuit **144** of FIG. 1E) of the energy storage module. For example, the input is used to determine the percentage of a cycle that the energy storage module is be ON or connected to a load, and controlling the energy storage module to be ON for the determined percentage of the cycle. Subsequently, method **2600** continues to **2618** where it ends or other operations are performed.

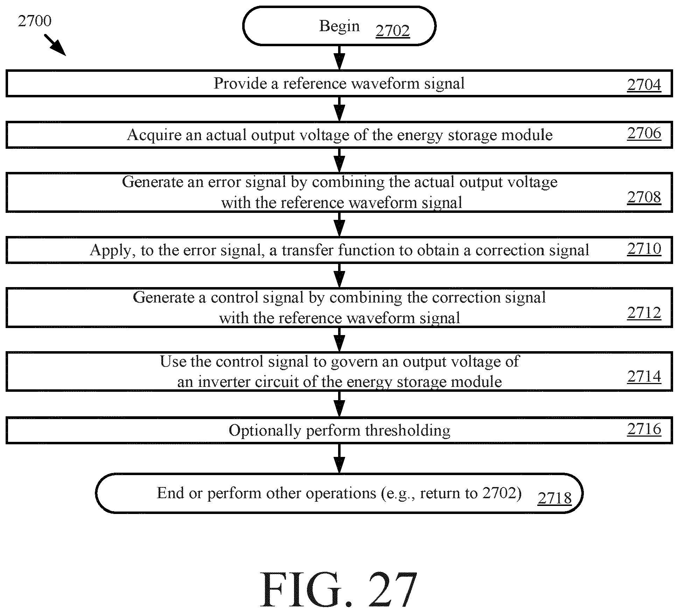

FIG. 27 provides a flow diagram of another illustrative method **2700** for operating a circuit (e.g., circuit **500** of FIG. 5) with an energy storage module (e.g., energy storage module **100** of FIG. 1). The circuit performs the operations of blocks **2702-2718.** The operations can be performed in the same or different order than that shown. Also, method **2700** can include more or less operations, steps or blocks than that shown.

Method **2700** begins with **2702** and continues with **2704** where a reference waveform signal (e.g., reference waveform signal **520** of FIG. 5) is provided. Next in **2706,** an actual output voltage (e.g., actual output voltage **534** of FIG. 5) of the energy storage module is acquired. An error signal (e.g., error signal **528** of FIG. 5) is generated in block **2708** by combining the actual output voltage with the reference waveform signal **(520).** This combining can involve subtracting the actual output voltage from the reference waveform signal. Block **2708** may also involve applying anti-aliasing filtering to the actual output voltage prior to generating the error signal.

A transfer function is applied to the error signal in block **2710** to obtain a correction signal (e.g., correction signal **530** of FIG. 5). The transfer function may be at least partially applied using a linear combination of digital integrators (e.g., integrators **710, 716, 722** of FIG. 7). In some scenarios, the operations of block **2710** involve: applying second order low pass filtering (e.g., at filter **782** of FIG. 7) to the error signal to obtain a first filtered signal (e.g., signal **730** of FIG. 7); applying first order low-shelving filtering (e.g., at filter **784** of FIG. 7) to the first filtered signal to obtain a second filtered signal (e.g., signal **744** of FIG. 7); combining the first filtered signal with the second filtered signal to obtain a third filtered signal (e.g., signal **746** of FIG. 7); applying first order low pass filtering (e.g., at filter **780** of FIG. 7) to the error signal to obtain a fourth filtered signal (e.g., signal **752** of FIG. 7); combing the third and fourth filtered signals; and/or combining (e.g., at combiner **726** of FIG. 7) the error signal with the third and fourth filtered signals. The error signal may be (i) amplified (e.g., at amplifier **702** of FIG. 7) using a first low-frequency DC gain value prior to applying the second order low pass filtering thereto and/or (ii) amplified (e.g., at amplifier **704** of FIG. 7) using a lower second DC gain value prior to applying the first order low pass filtering thereto. The first filtered signal may be amplified (e.g., at amplifier **718** of FIG. 7) prior to applying the first order low pass filtering thereto.

A control signal (e.g., control signal **532** of FIG. 5) is generated in block **2712** by combining the correction signal with the reference waveform signal. The control signal is used in block **2714** to govern an output voltage of an inverter circuit (e.g., transistor active bridge circuit **144** of FIG. 1) of the energy storage module.

Method **2700** may include optional block **2716** where thresholding may be performed. The thresholding operation can involve: comparing (e.g., at comparator **790** of FIG. 7) the third filtered signal output from a high-gain path (e.g., high-gain path **750** of FIG. 7) with a threshold value; and providing a result of the comparing to integrators (e.g., integrators **710, 716, 722** of FIG. 7) of a second order low pass filter (e.g., filter **782** of FIG. 7) and a first order low-shelving filter of the high-gain path (e.g., filter **784** of FIG. 7). Upon completing the operations of block **2714** and/or **2716,** method **2700** continues with **2719** where it ends or other operations are performed (e.g., return to **2702).**

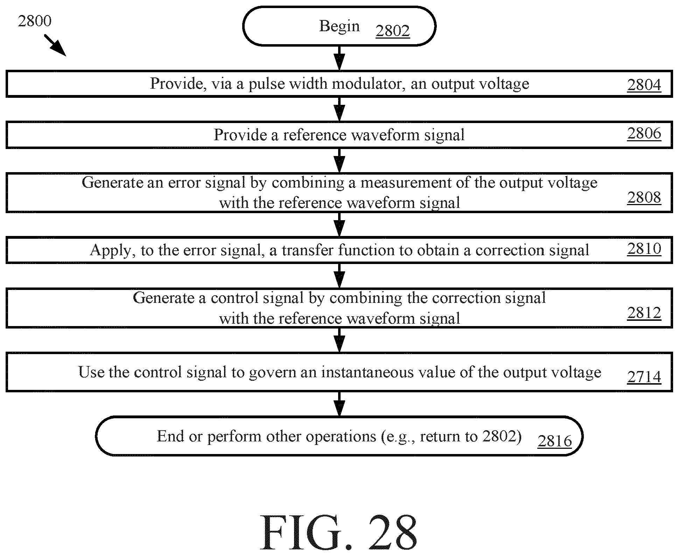

FIG. 28 provides a flow diagram of another illustrative method **2800** for operating a circuit (e.g., circuit **500** of FIG. 5) with an energy storage module (e.g., energy storage module **100** of FIG. 1). The circuit performs the operations of blocks **2802-2816.** The operations can be performed in the same or different order than that shown. Also, method **2800** can include more or less operations, steps or blocks than that shown.

Method **2800** begins with **2802** and continues with **2804** where the circuit provides, via a pulse width modulator (e.g., pulse width modulator **516** of FIG. 4), an output voltage (e.g.., output voltage **524** of FIG. 5) from the energy storage module. A reference waveform signal (e.g., reference waveform signal **520** of FIG. 5) is provided in **2806.** An error signal (e.g., error signal **528** of FIG. 5) is generated in **2808** by combining a measurement of the output voltage with the reference waveform signal. In **2810,** a transfer function is applied to the error signal to obtain a correction signal (e.g., signal **530** of FIG. 5). The transfer function can include, but is not limited to: a first gain component (e.g., second order low pass filter **782** of FIG. 7), a second gain component (e.g., first order low pass filter **780** of FIG. 7) acting parallely to the first gain component. The first gain component may have a second-order low-pass response with a first low-frequency DC gain value. The second gain component may have a first-order low-pass response with a second low-frequency DC gain value. The first low-frequency DC gain value is higher than the second low-frequency DC gain value.

A control signal (e.g., control signal **532** of FIG. 5) is generated by combining the correction signal with the reference waveform signal, as shown by block **2812.** In **2814,** the control signal is used to govern an instantaneous value of the output voltage. Subsequently, method **2800** continues to **2816** where it ends or other operations are performed.

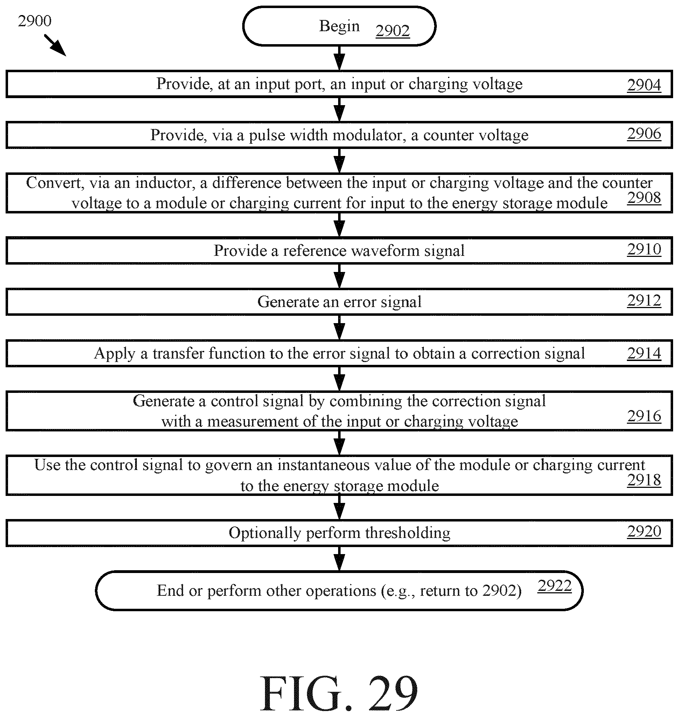

FIG. 29 provides a flow diagram of another illustrative method **2900** for operating a circuit (e.g., circuit **1300** of FIG. 13) with an energy storage module (e.g., energy storage module 100 of FIG. 1). The circuit performs the operations of blocks **2902-2922.** The operations can be performed in the same or different order than that shown. Also, method **2900** can include more or less operations, steps or blocks than that shown.

Method **2900** begins with **2902** and continues with **2904** where an input voltage or a charging voltage is provided at an input port (e.g., input port **306** of FIG. 3). A counter voltage is provided in block **2906** via a pulse width modulator (e.g., pulse width modulator **1316** of FIG. 13). In **2908,** operations are performed by the circuit to convert, via an inductor (e.g., inductor(s) **420-1, 420-2** of FIG. 4), a difference between the input or charging voltage and the counter voltage to a module or charging current (e.g., charging current **1324** of FIG. 13) for input to, charging of, or discharging from the energy storage module.

A reference waveform signal (e.g., reference waveform signal **1320** of FIG. 13) is provided in **2910.** An error signal (e.g., error signal **1328** of FIG. 13) is generated in block **2912** by combining a measurement of the module or charging current with the reference waveform signal. Block **2912** may also involve applying anti-aliasing filtering to the module or charging current prior to generating the error signal. The error signal may be generated by subtracting the module or charging current from the reference waveform signal.

A transfer is applied to the error signal in block **2914** to obtain a correction signal (e.g., signal **1330** of FIG. 13). The transfer function can include, but is not limited to: a first gain component (e.g., second order low pass filter **1692** of FIG. 16A), a second gain component (e.g., first order low pass filter **1690** of FIG. 16A) acting parallelly to the first gain component, and a unit gain response (e.g., link **1698** of FIG. 16A) providing a gain between an input and output of the transfer function. The first low-frequency DC gain value is higher than the second low-frequency DC gain value. The second low-frequency DC gain value may be higher than the unit gain. The unit gain may be lower than the second low-frequency DC gain value. The first gain component **(1692)** may include, but is not limited to, a linear combination of digital integrators (e.g., integrator **1610, 1614** of FIG. 16A).

In some scenarios, the application of the transfer function comprises: applying first order low pass filtering (e.g., at filter **1609** of FIG. 16A) to the error signal to obtain a first filtered signal (e.g., signal **1636** of FIG. 16A); applying a second order low pass filtering (e.g., at filter **1692** of FIG. 16A) to the error signal to obtain a second filtered signal (e.g., signal **1648** of FIG. 16A); and combining the first filter signal, the second filtered signal and/or the error signal to obtain a third filtered signal (e.g., signal **1649** of FIG. 16A). The error signal may be (i) amplified (e.g., at amplifier **1606** of FIG. 16A) using the first low frequency DC gain value prior to applying the second order low pass filtering thereto and/or (ii) amplified (e.g., at amplifier **1602** of FIG. 15) using the second low frequency DC gain value prior to applying the first order low pass filtering thereto.

In those or other scenarios, the application of the transform function comprises: applying first order low-shelving operations (e.g., operations of filter **1694** of FIG. 16A) to the third filtered signal to obtain a fourth filtered signal (e.g., signal **1654** of FIG. 16A); combining the third and fourth filtered signals to obtain a fifth filtered signal (e.g., signal **1656** of FIG. 16A); and combining the error signal with the fifth filtered signal to obtain a combined signal (e.g., signal **1658** of FIG. 16A). The third filtered signal may be amplified (e.g., at amplifier **1618** of FIG. 16A) prior to applying the first order low pass filtering thereto.

In those or other scenarios, the application of the transfer function comprises: applying first order high-shelving operations (e.g., operations of filter **1950** of FIG. 19) to the combined signal to obtain a sixth filtered signal (e.g., signal **1910** of FIG. 19); and combining (e.g., at combiner **1908** of FIG. 19) the sixth filtered signal with the combined signal (e.g., signal **1658** of FIG. 16A and 19).

A control signal (e.g., control signal **1332** of FIG. 13) is generated in block **2916** by combining the correction signal with a measurement of the input or charging voltage. The control signal is used in **2918** to govern an instantaneous value of the module or charging current for charging or discharging the energy storage module.

Method **2900** may optionally include block **2920** where thresholding may be performed. The thresholding may involve: comparing the second filtered signal with a threshold value; and providing a result of said comparing to integrators (e.g., integrators **1610**, **1614** of FIG. 16A) of a second order low pass filter (e.g., filter **1692** of FIG. 16A). Subsequently, method **2900** continues with **2922** where it ends or other operations are performed (e.g., return to **2902**).

Thus, there are herein disclosed systems, methods and, software products for operating circuit with an energy storage module. The methods comprising: providing a reference waveform signal; acquiring an actual output voltage of the energy storage module; generating an error signal by combining the actual output voltage with the reference waveform signal; applying, to the error signal, a transfer function to obtain a correction signal; generating a control signal by combining the correction signal with the reference waveform signal; and using the control signal to govern an output voltage of an inverter circuit of the energy storage module.

Additionally, there are also disclosed, systems, methods, and software products for operating circuit with energy storage module (ESM). The methods may comprise: providing, at input port, an input voltage (IV); providing, via PWM, counter voltage (CV2); converting, via inductor, a difference between IV and CV2 to module current (MC) which charges or discharges ESM; providing reference waveform signal (RWS) (e.g., another reference waveform signal); generating error signal (ES) (e.g., another error signal) by combining MC measurement with RWS; applying, to ES, a transfer function (TF) (e.g., another transfer function) to obtain correction signal (CS1) (e.g., another correction signal); generating control signal (CS2) (e.g., another control signal) by combining CS1 with IV measurement; and using CS2 to govern MC's instantaneous value. TF (e.g., another transfer function) may comprise: first gain component (FGC) (e.g., another first gain component) having a higher than first-order low-pass response with a first corner frequency (CF) (e.g., another first corner frequency), and a first low-frequency (or DC) gain value (e.g., another first low-frequency gain value); a second gain component (e.g., another second gain component) acting parallelly to FGC (e.g., another first gain component) and having a second low-frequency (or DC) gain value (e.g., another second low-frequency gain value); and a unit gain response providing a gain between TF's (e.g., another transfer function's) input and output.

It shall be appreciated that voltage control loop and current loop aspects may be combined (e.g., in the same system) to provide synergistic advantages.

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described scenarios. Rather, the scope of the present solution should be defined in accordance with the following claims and their equivalents.

Without excluding further possible embodiments, certain example embodiments are summarized in the following clauses:

Clause 1: A method (**2700**) of operating a circuit (**500**) with an energy storage module (**100**), the method comprising: providing a reference waveform signal (**520**); acquiring an actual output voltage (**524**) of the energy storage module (**100**); generating an error signal (**528**) by combining the actual output voltage (**524**) with the reference waveform signal (**520**); applying, to the error signal (**528**), a transfer function to obtain a correction signal (**530**); generating a control signal (**532**) by combining the correction signal (**530**) with the reference waveform signal (**520**); and using the control signal (**532**) to govern an output voltage of an inverter circuit (**144**) of the energy storage module (**100**). It should be understood that the output voltage of the inverter circuit of the energy storage module may be equal an actual output voltage of the energy storage module.

Clause 2: The method according to Clause 1, wherein acquiring of the actual output voltage involves digital sampling, and the method further comprises applying anti-aliasing filtering (**512**) to the actual output voltage (**524**) prior to generating the error signal (**528**).

Clause 3: The method according to any of the preceding method clauses, wherein said generating the error signal (**528**) comprises subtracting the actual output voltage (**524**) from the reference waveform signal (**520**).

Clause 4: The method according to according to any of the preceding method clauses, wherein said transfer function is applied using a linear combination of digital integrators (**710**, **716**, **722**).

Clause 5: The method according to according to any of the preceding method clauses, wherein said applying the transfer function comprises: applying second order low pass filtering (**782**) to the error signal (**528**) to obtain a first filtered signal (**730**); applying first order low-shelving filtering operations (**784**) to the first filtered signal (**730**) to obtain a second filtered signal (**744**); combining the first filtered signal (**730**) with the second filtered signal (**744**) to obtain a third filtered signal (**746**); applying first order low pass filtering (**780**) to the error signal (**528**) to obtain a fourth filtered signal (**752**); and combining the first, third and fourth filtered signals (**730**, **746**, **752**). The first order-low shelving filtering operations may include providing unity response (e.g., neither amplification nor attenuation) for high frequency components of the first filtered signal, amplification for low frequency components of the first filtered signal, and first order roll-off (e.g., -20 dB/decade) for intermediary frequency components of the first filtered signal.

Clause 6: The method according to according to any of the preceding method clauses, further comprising amplifying (**702**) the error signal (**528**) using a first gain value (e.g., DC gain value) prior to applying the second order low pass filtering (**782**) thereto and amplifying (**704**) the error signal (**528**) using a lower second gain value (e.g., DC gain value) prior to applying the first order low pass filtering (**780**) thereto.

Clause 7: The method according to according to any of the preceding method clauses, wherein the first order low-shelving filtering operations comprises amplifying (**718**) the first filtered signal (**730**) prior to applying first order low pass filtering (**720**, **722**) thereto.

Clause 8: The method according to according to any of the preceding method clauses, further comprising comparing (**790**) the third filtered signal (**746**) output from a high-gain path (**750**) with a threshold value, and providing a result of said comparing to integrators (**710**, **716**, **722**) of a second order low pass filter (**782**) and a first order low pass-shelving filter (**784**) of the high-gain path (**750**).

Clause 9: The method according to according to any of the preceding method clauses, further comprising combining (**726**) the error signal (**528**) with the third and fourth filtered signals (**746**, **752**).

Clause 10: The method (**2800**) according to any of the preceding claims, wherein the actual output voltage (**524**) is provided from the energy storage module (**100**) via a pulse width modulator (**516**), the error signal (**528**) is generated by combining a measurement of the output voltage (**524**) with the reference waveform signal (**520**), and the control signal (**532**) is used to govern an instantaneous value of the output voltage (**524**); and wherein the transfer function comprises: a first gain component (**782**), wherein the first gain component (**782**) has a second-order low-pass response with a first low-frequency gain value (e.g., DC gain value), a second gain component (**780**) acting parallely to the first gain component (**782**), the second gain component (**780**) has a first-order low-pass response with a second low-frequency gain value (e.g., DC gain value), and the first (e.g., DC) gain value is higher than the second (e.g., DC) gain value.

Clause 11: The method of any of the preceding clauses, wherein at least one of the energy storage modules (**100**) comprises an inverter circuit.

Clause 12: The method of clause 11, wherein any one or more of the inverter circuits comprises an H-bridge circuit (e.g., an H-bridge inverter).

Clause 13: The method of any of the preceding clauses, comprising a use of any one or more of the equations herein disclosed to perform one or more methods (e.g., method steps).

Clause 14: An electrical system comprising means for performing the steps of any of the above method clauses.

Clause 15: The electrical system of clause 14, preferably comprising at least one power converter.

Clause 16: The electrical system of clause 15, wherein at least one of the power converters is a buck type converter.

Clause 17: The electrical system of clause 14 or 15, wherein at least one of the power converters is an inverter, preferably a buck-type inverter.

Clause 18: The electrical system of any of the clauses 14 - 17, wherein the at least one power converter (e.g., the H-bridge circuit) is the inverter circuit included in at least one of the energy storage modules (**100**).

Clause 19: A circuit (**500**), comprising: a reference waveform generator (**502**) configured to provide a reference waveform signal (**520**); a voltage measurement circuit (**522**) configured to acquire an actual output voltage (**524**) of the energy storage module (**100**); a combiner (**504**) configured to generate an error signal (**528**) by combining the actual output voltage (**524**) with the reference waveform signal (**520**); a gain element (**506**) configured to apply, to the error signal (**528**), a transfer function to obtain a correction signal (**530**); a combiner (**508**) configured to generate a control signal (**532**) by combining the correction signal (**530**) with the reference waveform signal (**520**); and using the control signal (**532**) to govern an output voltage of an inverter circuit (**144**) of the energy storage module (**100**). It should be understood that the output voltage of the inverter circuit of the energy storage module may be equal to an actual output voltage of the energy storage module.

Clause 20: A method (**2800**) of operating a circuit (**500**) with an energy storage module (**100**), the method comprising: providing, via a pulse width modulator (**516**), an output voltage (**524**) from the energy storage module (**100**); providing a reference waveform signal (**520**); generating an error signal (**528**) by combining a measurement of the output voltage (**524**) with the reference waveform signal (**520**); applying, to the error signal (**528**), a transfer function to obtain a correction signal (**530**); generating a control signal (**532**) by combining the correction signal (**530**) with the reference waveform signal (**520**); and using the control signal (**532**) to govern an instantaneous value of the output voltage (**524**). The transfer function may comprise a first gain component (**782**) having a second-order low-pass response with a first low-frequency gain value (e.g., DC gain value), a second gain component (**780**) acting parallely to the first gain component (**782**) and having a first-order low-pass response with a second low-frequency gain value (e.g., DC gain value); and wherein the first low-frequency (e.g., DC) gain value is higher than the second low-frequency (e.g., DC) gain value.

Clause 21: The method of Clause 20, wherein at least one of the energy storage modules (100) comprises an inverter circuit.

Clause 22: The method of clauses 21, wherein any one or more of the inverter circuits comprises an H-bridge circuit (e.g., an H-bridge inverter).

Clause 23: The method of any of the preceding Clauses 20-22, comprising a use of any one or more of the equations herein disclosed to perform one or more methods (e.g., method steps).

Clause 24: The method according to any of the preceding claims, further comprising: providing, at an input port, an input voltage; providing, via a pulse width modulator, a counter voltage; converting, via an inductor, a difference between the input voltage and the counter voltage to a module current which charges or discharges the energy storage module; providing another reference waveform signal; generating another error signal by combining a measurement of the module current with the another reference waveform signal; applying, to the another error signal, a another transfer function to obtain another correction signal; generating another control signal by combining the another correction signal with a measurement of the input voltage; and using the another control signal to govern an instantaneous value of the module current to the energy storage module. The another transfer function may comprise: another first gain component, wherein the another first gain component has a higher than first-order low-pass response with another first low-frequency gain value; another second gain component acting parallelly to the another first gain component; wherein the another second gain component has a another second low-frequency gain value, and another unit gain response providing a gain between an input and output of the another transfer function, and the another first low-frequency gain value is higher than the another second low-frequency gain value.

Clause 25: An electrical system (e.g., a circuit and/or an electrical inverter) comprising means for performing the steps of any of the above method Clause 20-24.

Clause 26: The electrical system of Clause 25, preferably comprising at least one power converter.

Clause 27: The electrical system of clause 26, wherein at least one of the power converters is a buck type converter.

Clause 28: The electrical system of clause 25 or 26, wherein at least one of the power converters is an inverter, preferably a buck-type inverter.

Clause 29: The electrical system of any of the clauses 25-28, wherein the at least one power converter (e.g., the H-bridge circuit) is the inverter circuit included in at least one of the energy storage modules (**100**).

Clause 30: A circuit (**500**) comprising: an energy storage module (**100**) configured to provide an output voltage (**524**) via a pulse width modulator (**516**); a reference waveform generator (**502**) configured to provide a reference waveform signal (**520**); a combiner (**504**) configured to generate an error signal (**528**) by combining a measurement of the output voltage (**524**) with the reference waveform signal (**520**); a gain element (**506**) configured to apply, to the error signal (**528**), a transfer function to obtain a correction signal (**530**); a combiner (**508**) configured to generate a control signal (**532**) by combining the correction signal (**530**) with the reference waveform signal (**520**); and a controlled voltage source (**514**) configured to use the control signal (**532**) to govern an instantaneous value of the output voltage (**524**); wherein the transfer function comprises a first gain component (**782**) having a second-order low-pass response with a first low-frequency gain value (e.g., DC gain value), a second gain component (**780**) acting parallelly to the first gain component (**782**) and having a first-order low-pass response with a second low-frequency gain value (e.g., DC gain value); and wherein the first low-frequency (e.g., DC) gain value is higher than the second low-frequency (e.g., DC) gain value.

Clause 31: A computer software product comprising instructions which when executed by a suitable electrical system (e.g., via one or more processors) cause the electrical system (e.g., any of the processors) to perform any of the herein disclosed methods (e.g., the steps of any of the above method clauses).

The breadth and scope of this disclosure should not be limited by any of the above-described example embodiments, but should be defined only in accordance with the following claims and their equivalents.

**Claims**

1. A method of operating a circuit with an energy storage module, the method comprising:

    - providing a reference waveform signal;
    - acquiring an actual output voltage of the energy storage module;
    - generating an error signal by combining the actual output voltage with the reference waveform signal;
    - applying, to the error signal, a transfer function to obtain a correction signal;
    - generating a control signal by combining the correction signal with the reference waveform signal; and
    - using the control signal to govern an output voltage of an inverter circuit of the energy storage module.

2. The method according to claim 1, wherein acquiring of the actual output voltage involves digital sampling, and the method further comprises applying anti-aliasing filtering to the actual output voltage prior to generating the error signal.

3. The method according to any preceding claim, wherein said generating the error signal comprises subtracting the actual output voltage from the reference waveform signal.

4. The method according to any preceding claim, wherein said transfer function is applied using a linear combination of digital integrators.

5. The method according to any preceding claim, wherein said applying the transfer function comprises:

   applying second order low pass filtering to the error signal to obtain a first filtered signal;
   applying first order low-shelving filtering operations to the first filtered signal to obtain a second filtered signal;
   combining the first filtered signal with the second filtered signal to obtain a third filtered signal;
   applying first order low pass filtering to the error signal to obtain a fourth filtered signal; and
   combining the first, third and fourth filtered signals.

6. The method according to claim 5, further comprising amplifying the error signal using a first gain value prior to applying the second order low pass filtering thereto and amplifying the error signal using a lower second gain value prior to applying the first order low pass filtering thereto.

7. The method according to claim 5 or 6, wherein the first order low-shelving filtering operations comprise amplifying the first filtered signal prior to applying first order low pass filtering thereto.

8. The method according to any of claims 5-7, wherein the first order low-shelving filtering operations comprise providing unity response for high frequency components of the first filtered signal, amplification for low frequency components of the first filtered signal, and first order roll-off for intermediary frequency components of the first filtered signal.

9. The method according to any of claims 5-8, further comprising comparing the third filtered signal output from a high-gain path with a threshold value, and providing a result of said comparing to integrators of a second order low pass filter and a first order low pass-shelving filter of the high-gain path.

10. The method according to any of claims 5-9, further comprising combining the error signal with the third and fourth filtered signals.

11. The method according to any of the preceding claims, wherein the transfer function comprises:

   a first gain component having a second-order low-pass response with a first low-frequency gain value,
   a second gain component acting parallely to the first gain component and having a first-order low-pass response with a second low-frequency gain value, and
   the first low-frequency gain value is higher than the second low-frequency gain value.

12. The method according to any of the preceding claims, wherein:

   - the actual output voltage is provided from the energy storage module via a pulse width modulator;
   - the error signal is generated by combining a measurement of the output voltage with the reference waveform signal; and
   - the control signal is used to govern an instantaneous value of the output voltage.

13. The method according to any of the preceding claims, further comprising:

   - providing, at an input port, an input voltage;
   - providing, via a pulse width modulator, a counter voltage;
   - converting, via an inductor, a difference between the input voltage and the counter voltage to a module current which charges or discharges the energy storage module;
   - providing another reference waveform signal;
   - generating another error signal by combining a measurement of the module current with the another reference waveform signal;

- applying, to the another error signal, another transfer function to obtain another correction signal;
- generating another control signal by combining the another correction signal with a measurement of the input voltage; and
- using the another control signal to govern an instantaneous value of the module current to the energy storage module;

wherein the another transfer function comprises:

a first gain component, wherein the first gain component has a higher than first-order low-pass response with a first low-frequency gain value;
a second gain component acting parallelly to the first gain component, wherein the second gain component has a second low-frequency gain value; and
a unit gain response providing a gain between an input and output of the transfer function;
the first low-frequency gain value is higher than the second low-frequency gain value.

14. An electrical system comprising means for performing the steps of any of the above method claims.

15. A computer software product comprising instructions which when executed by one or more processors of a suitable electrical system cause any of the processors to perform the steps of any of the above method claims.

EP 4 641 911 A1

100

104

104

104

102

105

104

106

103

101

104

102

FIG. 1A

Circuit 120

Electrical Energy Storage Cells 102

Voltage and/ or Current Sensor(s) 126

Temperature Sensor 128

Module Temperature Sensor 130

Selective Circuit Interrupt 134

138

136

Data Processing Circuit 132

Isolator(s)

To/From Circuit 120

512

510

Transistor Active Bridge Circuit 144

110-1

110-2

110-3

110-4

102

S1

S2

FIG. 1B

FIG. 1C

FIG. 1D

FIG. 1E

EP 4 641 911 A1

FIG. 2A

EP 4 641 911 A1

FIG. 2B

FIG. 2C

FIG. 3A

EP 4 641 911 A1

FIG. 3B

FIG. 4A

FIG. 4B

FIG. 5

EP 4 641 911 A1

**Frequency Response Graph 600 of AAF 512**

FIG. 6

EP 4 641 911 A1

**Transfer Function Circuit (e.g., for Gain Element 506)**

FIG. 7

(Voltage Loop)

EP 4 641 911 A1

Digital Domain Response Graph 800

FIG. 8

Open Loop Response Graph 900

FIG. 9A

Open Loop Transfer Function Graph 950

GE_MAGNITUDE ----- GE_PHASE

phase [°]

frequency [Hz]

magnitude [dB]

# FIG. 9B

**Transfer Function Circuit (e.g., for Gain Element 506)**

# FIG. 10

(Voltage Loop)

EP 4 641 911 A1

Frequency Response Graph 1100

FIG. 11

EP 4 641 911 A1

FIG. 12

**FIG. 13**
(Current Loop)

**Frequency Response Graph 1400 for AAF 1312**

FIG. 14

EP 4 641 911 A1

**Analog Transfer Function Graph 1500 for AAF 1312 combined with**
**Voltage Difference to Current Translation in Inductors 420-1, 420-2**

FIG. 15

Transfer Function Circuit (e.g., for Gain Element 1306)

FIG. 16A

(Current Loop)

**Transfer Function Circuit (e.g., for Gain Element 1306)**

FIG. 16B

(Current Loop)

EP 4 641 911 A1

Digital Domain Response Graph 1700

FIG. 17

EP 4 641 911 A1

Open Loop Response Graph 1800

FIG. 18A

## Open Loop Response Graph 1850
### (If high-gain path is halted)

—— GE_MAGNITUDE　　－－－ GE_PHASE

# FIG. 18B

**Transfer Function Circuit (e.g., for Gain Element 1306)**

FIG. 19

(Current Loop)

Filter Response Graph 2000

——— GE_MAGNITUDE    – – – – GE_PHASE

FIG. 20

EP 4 641 911 A1

Open Loop Response Graph 2100

FIG. 21

EP 4 641 911 A1

FIG. 22

(Voltage Loop)

EP 4 641 911 A1

FIG. 23

FIG. 24A

**FIG. 24B**

FIG. 25

2600

Begin   2602

Generate a desired voltage or a desired current                    2604

Acquire an actual output voltage of the energy storage module or an actual charging current for
the energy storage module                    2606

Apply anti-aliasing filtering to
the actual output voltage or the actual charging current                    2608

Generate an error signal by combining the actual output voltage with the desired voltage or by
combining the actual charging current with the desired current                    2610

Multiply the error signal with a frequency response
to obtain a correction voltage or signal                    2612

Combine the correction voltage or signal with the desired or input voltage to obtain an input for
a pulse width modulator of a controlled voltage source                    2614

Use the input to govern an output voltage or an instantaneous charging current of an inverter of
the energy storage module                    2616

End or perform other operations   2618

# FIG. 26

2700

Begin 2702

Provide a reference waveform signal 2704

Acquire an actual output voltage of the energy storage module 2706

Generate an error signal by combining the actual output voltage with the reference waveform signal 2708

Apply, to the error signal, a transfer function to obtain a correction signal 2710

Generate a control signal by combining the correction signal with the reference waveform signal 2712

Use the control signal to govern an output voltage of an inverter circuit of the energy storage module 2714

Optionally perform thresholding 2716

End or perform other operations (e.g., return to 2702) 2718

FIG. 27

2800

Begin 2802

Provide, via a pulse width modulator, an output voltage 2804

Provide a reference waveform signal 2806

Generate an error signal by combining a measurement of the output voltage with the reference waveform signal 2808

Apply, to the error signal, a transfer function to obtain a correction signal 2810

Generate a control signal by combining the correction signal with the reference waveform signal 2812

Use the control signal to govern an instantaneous value of the output voltage 2714

End or perform other operations (e.g., return to 2802) 2816

FIG. 28

2900

Begin 2902

Provide, at an input port, an input or charging voltage 2904

Provide, via a pulse width modulator, a counter voltage 2906

Convert, via an inductor, a difference between the input or charging voltage and the counter voltage to a module or charging current for input to the energy storage module 2908

Provide a reference waveform signal 2910

Generate an error signal 2912

Apply a transfer function to the error signal to obtain a correction signal 2914

Generate a control signal by combining the correction signal with a measurement of the input or charging voltage 2916

Use the control signal to govern an instantaneous value of the module or charging current to the energy storage module 2918

Optionally perform thresholding 2920

End or perform other operations (e.g., return to 2902) 2922

FIG. 29

$$A = \frac{ka/fs}{1-z^{-1}}$$

$$B = \frac{kb/fs}{1-z^{-1}}$$

FIG. 30

EP 4 641 911 A1

Europäisches Patentamt
European Patent Office
Office européen des brevets

**EUROPEAN SEARCH REPORT**

**Application Number**

EP 24 17 2780

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHUAI JIANG ET AL: "High performance repetitive control for three-phase CVCF PWM inverter using a 4th-order linear phase IIR filter", APPLIED POWER ELECTRONICS CONFERENCE AND EXPOSITION (APEC), 2012 TWENTY-SEVENTH ANNUAL IEEE, IEEE, 5 February 2012 (2012-02-05), pages 225-231, XP032127674, DOI: 10.1109/APEC.2012.6165824 ISBN: 978-1-4577-1215-9 | 1-4,11, 12,14,15 | INV. H02M7/5387 H02M1/00 ADD. H02J7/00 H02M7/483 |
| A | * Sections II.A and II.B d); page 225 - page 226; figures 1, 2, 8 * | 5-10,13 | |
| X | YUN WEI LI ET AL: "Investigation and Improvement of Transient Response of DVR at Medium Voltage Level", IEEE TRANSACTIONS ON INDUSTRY APPLICATIONS, IEEE SERVICE CENTER, PISCATAWAY, NJ, US, vol. 43, no. 5, 1 September 2007 (2007-09-01), pages 1309-1319, XP011192488, ISSN: 0093-9994, DOI: 10.1109/TIA.2007.904430 | 1,3,12, 14,15 | TECHNICAL FIELDS SEARCHED (IPC) H02M H02J |
| A | * figures 1, 3(a) * | 2,4-11, 13 | |

The present search report has been drawn up for all claims

| Place of search | Date of completion of the search | Examiner |
|---|---|---|
| Munich | 11 October 2024 | Sulic, Tomislav |

EPO FORM 1503 03.82 (P04C01)

**EP 4 641 911 A1**

**Patent documents cited in the description**

- US 20220037891
- US 20220247030
- US 20220359918
- US 20220360094